# EUROPEAN PATENT APPLICATION

(11) **EP 1 545 109 A1**
(43) Date of publication of application: **22.06.2005**
(21) Application number: 03798475.4
(22) Date of filing: 25.09.2003
(51) Int. Cl.: H04M 3/56, H04M 3/42, H04N 7/15

(54) **VIDEO TELEPHONE INTERPRETATION SYSTEM AND VIDEO TELEPHONE INTERPRETATION METHOD**

(30) Priority: 27.09.2002 JP 2002282880
(71) Applicant: Ginganet Corporation, Osaka-shi, Osaka 556-0017 (JP)
(72) Inventor: Sahashi, Nozomu, Kishiwada-shi, Osaka 596-0045 (JP)
(74) Representative: Schoppe, Fritz, Dipl.-Ing.
(86) International application number: PCT/JP2003/012191
(87) International publication number: WO 2004/030328

(57) **Abstract**

A videophone interpretation system and a videophone interpretation method in that a caller does not have to search for an interpreter in advance and hold consultation with a callee and that the system and the method are available also in an emergency, thereby minimizing the restraint time of the interpreter to reduce the interpretation service cost are provided.
The videophone interpretation system accepts a call from a caller terminal and refers an interpreter registration table to extract the terminal number of an interpreter capable of interpreting between the language of a caller and the language of a callee and connects the caller terminal, a callee terminal and an interpreter terminal. The videophone interpretation system also has a function to communicate a video and an audio necessary for interpretation between the terminals. The audio of an interpreter is transmitted either to the caller or callee, specified by the interpreter terminal. The audio of the conversation partner is suppressed or interrupted when the audio of the interpreter is detected by an audio synthesizer, thereby providing a speedy and precise interpretation service.

## Description

### Technical Field

The present invention relates to a videophone interpretation system and a videophone interpretation method which provide an interpretation service for a conversation with a videophone between persons using different languages, and in particular to a videophone interpretation system and a videophone interpretation method which provide administration services such as those offered by a public office, a hospital and a police station, to a foreigner incapable of using the local language, without an interpreter being resident in an administrative body mentioned above.

### Background Art

In recent years, persons in remote locations have come to converse with each other at a practical level by using a videophone, on the strength of development of communications technologies. In order for persons who use different languages to converse smoothly with each other, an interpreter is required. It is thus desired that an interpretation service with a videophone will become widely available.

In the prior art, in order to obtain an interpretation service with a videophone, a three-way call had to be established by using a multipoint conferencing unit offering a teleconference service between a caller wishing to have a conversation, a callee as a conversation partner, and an interpreter who interprets between a language used by the caller and a language used by the callee.

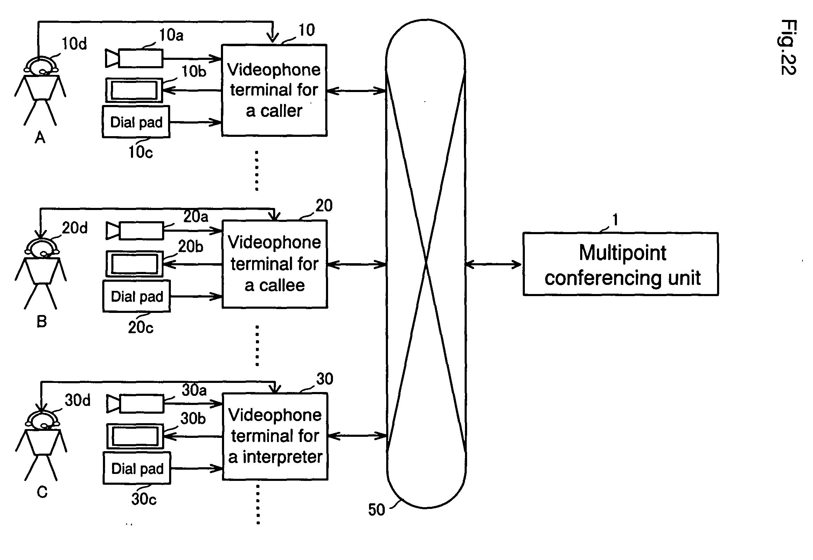

Fig. 22 shows a prior art configuration whereby an interpretation service is obtained by using a video conference service with a multipoint conferencing unit. In Fig. 22, a numeral 10 represents a videophone terminal for the caller (hereinafter referred to as a caller terminal), 20 a videophone terminal for the callee (hereinafter referred to as a callee terminal), 30 a videophone terminal for the interpreter (hereinafter referred to as an interpreter terminal), 50 a public telephone line, and 1 a multipoint conferencing unit. Each videophone terminal comprises a camera (a) for picking up the user, a display (b) for displaying a received video, a dial pad (c) for dialing the number of a distant party, a headset (d) including a microphone for acquiring the voice of the user and listening to the received audio. The multipoint conferencing unit 1 offers a videoconferencing service and has a function to accept a call from a reserved terminal, synthesizing videos and audios transmitted from the terminals connected and transmitting to each terminal the synthesized video and audio.

Next, the procedure used to obtain an interpretation service using the multipoint conferencing unit will be described. First, a caller searches for and calls an interpreter capable of interpreting between the language used by the caller and that used by the callee. Next, the called interpreter calls the callee based on the request made by the caller and determines a conversation date/time. When the conversation date/time is determined, the caller reserves a teleconferencing at the multipoint conferencing unit 1. The caller, the callee and the interpreter check in to the multipoint conferencing unit 1 with respective videophone terminal by using the specified login information when the reserved date/time is reached. This starts a teleconferencing between the caller terminal 10, callee terminal 20 and the interpretation terminal 30. On the display of each terminal, a video obtained by synthesizing the video of the caller, the video of the callee and the video of the interpreter is displayed. To the earphone of the headset of each terminal, an audio obtained by synthesizing the audio of the caller, the audio of the callee and the audio of the interpreter is output. Thus, the caller and the callee can have a videophone conversation while obtaining interpretation by the interpreter.

In such a prior art videophone interpretation service using a multipoint conferencing unit, it is necessary to reserve a teleconference on the multipoint conferencing unit before starting a videophone conversation, and the caller had to search for an interpreter and contact the callee and hold consultation to set a videoconference in advance.

Thus, it has been difficult to apply this approach to an interpretation service which requires urgent support such as in case a foreigner incapable of using the local language urgently obtains an administration service from a public office, a hospital or a police station. The interpreter must join from the stage of prior consultation between the caller and the callee. This restrains the interpreter for a long time so that the interpretation service cost rises high.

Thus, a main object of the invention is to provide a videophone interpretation system and a videophone interpretation method which eliminates the need for a caller to search for an interpreter and consult with a callee in advance and which are available also in an emergency, thereby minimizing the restraint time of the interpreter and reducing the interpretation service cost.

### Disclosure of the Invention

A videophone interpretation system according to claim 1 is a videophone interpretation system where an interpreter interprets a videophone conversation between a caller and a callee using different languages, the videophone interpretation system comprising connection means for connecting a caller terminal, a callee terminal and an interpreter terminal, and communication means for communicating a video and an audio between the terminals connected by the connection means, characterized in that the connection means includes an interpreter registration table where at least the language types interpretable by an interpreter and the terminal number of the interpreter are registered, a function to accept a call from a caller terminal, a function to acquire the terminal number of a callee, language type of the caller and the language type of the callee from the caller terminal for which the call was accepted, a function to extract the terminal number of the interpreter by referencing the interpreter registration table from the acquired language type of the caller and language type of the callee, a function to call the interpreter terminal by using the terminal number of the interpreter extracted, and a function to call the callee terminal by using the acquired terminal number of the callee and that the communication means transmits a video including at least a video from the callee terminal and an audio including at least an audio from the interpreter terminal to the caller terminal, a function to transmit a video including at least a video from the caller terminal and an audio including at least an audio from the interpreter terminal to the callee terminal, and a function to transmit an audio including at least an audio from the caller terminal and an audio from the callee terminal to the interpreter terminal.

With this configuration, upon a call from a caller terminal, the terminal number of an interpreter capable of interpreting between the language of the caller and the language of the callee is extracted from the interpreter registration table, and the caller terminal, the callee terminal and the interpreter terminal are automatically connected, and a video and an audio required for interpretation are communicated. The caller need not previously search for an interpreter and hold consultation with the callee thus providing a videophone interpretation service which may be available even in an emergency. The interpreter can join a videophone conversation anywhere he/she may be, as long as he/she can be called. This minimizes the restraint time of the interpreter and reduces the interpretation service cost.

The videophone interpretation system according to claim 2 is the videophone interpretation system according to claim 1, characterized in that the communication means includes a function to transmit a video obtained by synthesizing a video from the callee terminal as a main window and a video from the interpreter terminal as a sub window to the caller terminal, a function to transmit a video obtained by synthesizing a video from the caller terminal as a main window and a video from the interpreter terminal as a sub window to the callee terminal, and a function to transmit a video obtained by synthesizing a video from the caller terminal and a video from the callee terminal to the interpreter terminal.

This allows the caller and the callee to check the expression of the interpreter in a Picture-in-Picture fashion so that it is easy to understand the voice of the interpreter. The interpreter can check the expression of the caller and the expression of the callee so that a precise interpretation is enabled.

The videophone interpretation system according to claim 3 is the videophone interpretation system according to claim 1 or 2, the communication means including a first audio transmission function to synthesize an audio from the callee terminal and an audio from the interpreter terminal and transmit the resultant to the caller terminal, a second audio transmission function to synthesize an andio from the caller terminal and an audio from the interpreter terminal and transmit the resultant to the callee terminal, a third audio transmission function to synthesize an audio from the caller terminal and an audio from the callee terminal and transmit the resultant to the interpreter terminal, and an unnecessary side audio suppression function to suppress an unnecessary side audio either an audio from the interpreter terminal supplied to the first audio transmission function or an audio from the interpreter terminal supplied to the second audio transmission function based on a command from the interpreter terminal, characterized in that the first audio transmission function includes a callee audio suppression function to suppress an audio from the callee terminal when an audio from the interpreter terminal is detected and that the second audio transmission function includes a caller audio suppression function to suppress an audio from the caller terminal when an audio from the interpreter terminal is detected.

In an interpretation with a prior art videoconference, an audio obtained by synthesizing the audios of the three parties is transmitted to each terminal. Thus, when a user at a terminal speaks while a user at any other terminal is speaking, the content of the conference is difficult to understand with each other. Thus, the interpreter awaits the completion of the speech of the caller before interpretation, a callee awaits the completion of the interpretation before speech, and the interpreter awaits the completion of the speech of the callee before interpretation. Since such a procedure must be repeated in a conference, it has been difficult to perform a speedy and precise interpretation. According to the invention, the unnecessary side audio suppression function suppresses an unnecessary side transmission of an audio of the interpreter to either the caller or the callee, based on a command from the interpreter terminal. When the audio of the interpreter is detected, transmission of the original audio of the callee to the caller is suppressed by the callee audio suppression function. When the audio of the interpreter is detected, transmission of the original audio of the caller to the callee is suppressed by the caller audio suppression function. With these functions, the caller and the callee can grasp the interpretation even when their speech overlap that of the interpreter, thereby providing a speedy and precise videophone interpretation service.

The suppression includes a case where the level of an audio signal is lowered in order to allow hearing to some extent and a case where the audio signal is shut off so as to mute the audio. The unnecessary audio suppression function includes a case where the audio of the interpreter is transmitted selectively to either the caller or the callee.

The videophone interpretation system according to claim 4 is the videophone interpretation system according to claim 1 or 2, the communication means including a first audio transmission function to selectively transmit either an audio from the callee terminal or an audio from the interpreter terminal to the caller terminal, a second audio transmission function to selectively transmit either an audio from the caller terminal or an audio from the interpreter terminal to the callee terminal, a third audio transmission function to synthesize an audio from the caller terminal and an audio from the callee terminal and transmit the resultant to the interpreter terminal, and an unnecessary side audio suppression function to suppress an unnecessary side audio either an audio from the interpreter terminal supplied to the first audio transmission function or an audio from the interpreter terminal supplied to the second audio transmission function by a command from the interpreter terminal, characterized in that the first audio transmission function includes a function to shut off an audio from the callee terminal and transmit an audio from the interpreter terminal when an audio from the interpreter is detected and that the second audio transmission function includes a function to shut off an audio from the caller terminal and transmit an audio from the interpreter terminal when an audio from the interpreter terminal is detected.

According to the invention, the unnecessary side audio suppression function suppresses an unnecessary side transmission of an audio of the interpreter to either the caller or callee, based on a command from the interpreter terminal. When an audio of the interpreter is detected in the first audio transmission function, the original audio of the callee switches to the audio of the interpreter. When an audio of the interpreter is detected in the second audio transmission function, the original audio of the callee switches to the audio of the interpreter. With these functions, the caller and the callee can grasp the interpretation even when their speech overlap that of the interpreter, thereby providing a speedy and precise videophone interpretation service.

The unnecessary audio suppression function includes a case where the audio of the interpreter is transmitted selectively to either the caller or the callee.

The videophone interpretation system according to claim 5 is the videophone interpretation system according to claim 1 or 2, characterized in that the communication means includes a first audio transmission function to perform audio multiplexing on an audio from the callee terminal and an audio from the interpreter terminal and transmit the resultant to the caller terminal, a second audio transmission function to performs audio multiplexing on an audio from the caller terminal and an audio from the interpreter terminal and transmit the resultant to the callee terminal, a third audio transmission function to perform audio multiplexing on an audio from the caller terminal and an audio from the callee terminal and transmit the resultant to the interpreter terminal, and an unnecessary side audio suppression function to suppress an unnecessary side audio either an audio from the interpreter terminal supplied to the first audio transmission function or an audio from the interpreter terminal supplied to the second audio transmission function, based on a command from the interpreter terminal.

According to the invention, the unnecessary side audio suppression function suppresses an unnecessary side transmission of an audio of the interpreter to either the caller or callee, by a command from the interpreter terminal. In the first audio transmission function, the original audio of the callee and the audio of the interpreter are multiplexed and the resultant is transmitted to the caller. In the second audio transmission function, the original audio of the caller and the audio of the interpreter are multiplexed and the resultant is transmitted to the callee. With these functions, the caller and the callee can grasp the interpretation even when their speech overlap that of the interpreter, thereby providing a speedy and precise videophone interpretation service.

The unnecessary side audio suppression function includes a case where the audio of the interpreter is selectively transmitted to either the caller or callee.

The videophone interpretation system according to claim 6 is the videophone interpretation system according to any one of claims 1 through 5, characterized in that the communication means includes a function to record a video including a video from the caller terminal, a video from the callee terminal and a video from the interpreter terminal and an audio including an audio from the caller terminal, an audio from the callee terminal and an audio from the interpreter terminal, and a function to reproduce and transmit the recorded video and audio by a request from a terminal.

With this configuration, videos and audios from the caller, callee and interpreter in an interpretation service are recorded. As the details of recording can be checked by a request from a terminal, it is possible to review the contents which were not clear on the spot or check later the details of the communications service.

A video may be recorded by recording a synthesized video of a video to be transmitted to a caller terminal and a video to be transmitted to a callee terminal. By doing so, it is possible to check the video received by the caller or callee.

An audio may be recorded by recording an audio obtained by performing audio multiplexing on an audio to be transmitted to a caller terminal and an audio to be transmitted to a callee terminal. By doing so, it is possible to check the contents by the language of the caller and that of the callee separately from a terminal equipped with an audio demultiplexing function.

Or, an audio to be transmitted to a caller terminal and an audio to be transmitted to a callee terminal may be recorded separately and the audio of a side specified based on a command from a terminal may be reproduced for transmission. By doing so, it is possible to check the contents by the language of the caller and that of the callee separately even from a terminal not equipped with an audio demultiplexing function.

A videophone interpretation system according to claim 7 is a videophone interpretation system where a videophone conversation between a caller and a callee using different languages is interpreted by a first interpreter who interprets the language of the callee to the language of the caller and a second interpreter who interprets the language of the caller into the language of the callee, the videophone interpretation system comprising connection means for connecting a caller terminal, a callee terminal, a first interpreter terminal and a second interpreter terminal and communication means for communicating a video and an audio between the terminals connected by the connection means, characterized in that the connection means includes an interpreter registration table where at least the language types interpretable by an interpreter and the terminal number of the interpreter are registered, a function to accept a call from a caller terminal, a function to acquire the terminal number of a callee, language type of the caller and the language type of the callee from the caller terminal for which the call was accepted, a function to extract the terminal number of the first interpreter by referencing the interpreter registration table from the acquired language type of the callee and language type of the caller, a function to call the first interpreter by using the terminal number of the interpreter extracted, a function to extract the terminal number of the second interpreter by referencing the interpreter registration table from the acquired language type of the caller and language type of the callee, a function to call the second interpreter by using the terminal number of the interpreter extracted, and a function to call the callee terminal by using the acquired terminal number of the callee, and that the communication means includes a function to transmit a video including at least a video from the callee terminal and an audio including at least an audio from the first interpreter to the caller terminal, a function to transmit a video including at least a video from the caller terminal and an audio including at least an audio from the second interpreter to the callee terminal, a function to transmit an audio including at least an audio from the callee terminal to the first interpreter terminal, and a function to transmit an audio including at least an audio from the caller terminal to the second interpreter terminal.

With this configuration, based on a call from the caller terminal, the terminal number of the first interpreter who interprets the language of the callee into the language of the caller and the terminal number of the second interpreter who interprets the language of the caller into the language of the callee are extracted from the interpreter registration table. The caller terminal, the callee terminal, the first interpreter terminal and the second interpreter terminal are automatically connected and a video and an audio required for interpretation are communicated. The caller need not previously search for an interpreter and hold consultation with the callee thus providing a videophone interpretation service which may be available even in an emergency. The interpreter can join a videophone conversation anywhere he/she may be, as long as he/she can be called. This minimizes the restraint time of the interpreter and reduces the interpretation service cost.

The videophone interpretation system according to claim 8 is the videophone interpretation system according to claim 7, characterized in that the communication means includes a function to transmit a video obtained by synthesizing a video from the callee terminal as a main window and a video from the first interpreter terminal as a sub window to the caller terminal, a function to transmit a video obtained by synthesizing a video from the caller terminal as a main window and a video from the second interpreter terminal as a sub window to the callee terminal, a function to transmit a video obtained by synthesizing a video from the callee terminal and a video from the caller terminal to the first interpreter terminal, and a function to transmit a video obtained by synthesizing a video from the caller terminal and a video from the callee terminal to the second interpreter terminal.

This allows the caller and the callee to check the expressions of the first interpreter and the second interpreter respectively in a Picture-in-Picture fashion so that it is easy to understand the voice of the interpreter. Each interpreter can check the expression of the caller and the expression of the callee so that a precise interpretation is enabled.

The videophone interpretation system according to claim 9 is the videophone interpretation system according to claim 7 or 8, the communication means including a first audio transmission function to synthesize an audio from the callee terminal and an audio from the first interpreter terminal and transmit the resultant to the caller terminal, a second audio transmission function to synthesize an audio from the caller terminal and an audio from the second interpreter terminal and transmit the resultant to the callee terminal, a third audio transmission function to transmit at least an audio from the callee terminal to the first interpreter terminal, and a fourth audio transmission function to transmit at least an audio from the caller terminal to the second interpreter terminal, characterized in that the first audio transmission function includes a callee audio suppression function to suppress an audio from the callee terminal when an audio from the first interpreter terminal is detected and that the second audio transmission function includes a caller audio suppression function to suppress an audio from the caller terminal when an audio from the second interpreter terminal is detected.

According to the invention, when the audio of the first interpreter is detected, transmission of the original audio of the callee to the caller is suppressed by the callee audio suppression function. When the audio of the second interpreter is detected, transmission of the original audio of the caller to the callee is suppressed by the caller audio suppression function. With these functions, the caller and the callee can grasp the interpretation even when their speech overlap that of the interpreter, thereby providing a speedy and precise videophone interpretation service.

The suppression includes a case where the level of an audio signal is lowered in order to allow hearing to some extent and a case where the audio signal is shut off so as to mute the audio.

The videophone interpretation system according to claim 10 is the videophone interpretation system according to claim 7 or 8, the communication means including a first audio transmission function to selectively transmit either an audio from the callee terminal or an audio from the first interpreter terminal to the caller terminal, a second audio transmission function to selectively transmit either an audio from the caller terminal or an audio from the second interpreter terminal to the callee terminal, a third audio transmission function to transmit at least an audio from the callee terminal to the first interpreter terminal, and a fourth audio transmission function to transmit at least an audio from the caller terminal to the second interpreter terminal, characterized in that the first audio transmission function includes a function to shut off an audio from the callee terminal and transmit an audio from the first interpreter terminal when detecting an audio from the first interpreter terminal and that the second audio transmission function includes a function to shut off an audio from the caller terminal and transmit an audio from the second interpreter terminal when detecting an audio from the second interpreter terminal.

According to the invention, when the audio of the first interpreter is detected in the first audio transmission function, the original audio of the callee is switched to the audio of the first interpreter. When the audio of the second interpreter is detected in the second audio transmission function, the original audio of the callee is switched to the audio of the second interpreter. With these functions, the caller and the callee can grasp the interpretation even when their speech overlap that of each interpreter, thereby providing a speedy and precise videophone interpretation service.

The videophone interpretation system according to claim 11 is the videophone interpretation system according to claim 7 or 8, characterized in that the communication means includes a first audio transmission function to perform audio multiplexing on an audio from the callee terminal and an audio from the first interpreter terminal and transmit the resultant to the caller terminal, a second audio transmission function to perform audio multiplexing on an audio from the caller terminal and an audio from the second interpreter terminal and transmit the resultant to the callee terminal, a third audio transmission function to transmit at least an audio from the callee terminal to the first interpreter terminal, and a fourth audio transmission function to transmit at least an audio from the caller terminal to the second interpreter terminal.

According to the invention, in the first audio transmission function, the original audio of the callee and the audio of the first interpreter are audio multiplexed and the resultant is transmitted to the caller. In the second audio transmission function, the original audio of the caller and the audio of the second interpreter are audio multiplexed and the resultant voice is transmitted to the callee. With these functions, the caller and the callee can grasp the interpretation even when their speech overlap that of each interpreter, thereby providing a speedy and precise videophone interpretation service.

The videophone interpretation system according to claim 12 is the videophone interpretation system according to any one of claims 7 through 11, characterized in that the communication means includes a function to record a video including a video from the caller terminal, a video from the callee terminal, a video from the first interpreter terminal and a video from the second interpreter terminal and an audio including an audio from the caller terminal, an audio from the callee terminal, an audio from the first interpreter terminal and an audio from the second interpreter terminal, and a function to reproduce and transmit the recorded video and audio by a request from a terminal.

With this configuration, videos and audios from the caller, callee, first interpreter and second interpreter in an interpretation service are recorded. As the details of recording can be checked by a request from a terminal, it is possible to review the contents which were not clear on the spot or check later the details of the communications service.

A video may be recorded by recording a synthesized video of a video to be transmitted to a caller terminal and a video to be transmitted to a callee terminal. By doing so, it is possible to check the video received by the caller or the callee.

An audio may be recorded by recording an audio obtained by performing audio multiplexing on an audio to be transmitted to a caller terminal and an audio to be transmitted to a callee terminal. By doing so, it is possible to check the contents by the language of the caller and that of the callee separately from a terminal equipped with an audio demultiplexing function.

Or, an audio to be transmitted to a caller terminal and an audio to be transmitted to a callee terminal may be recorded separately and the audio of a side specified by a command from a terminal may be reproduced and transmitted. By doing so, it is possible to check the contents by the language of the caller and that of the callee separately even from a terminal not equipped with an audio demultiplexing function.

The videophone interpretation system according to claim 13 is the videophone interpretation system according to any one of claims 1 through 12, characterized in that selection information for selecting an interpreter is registered in the interpreter registration table and that the connection means includes a function to acquire the conditions for selecting an interpreter from the caller terminal and a function to extract the terminal number of an interpreter who satisfies the acquired selection conditions by referencing the interpreter registration table.

This selects an interpreter who satisfies the object of a videophone conversation between a caller and a callee from among the interpreters registered in the interpreter registration table. Selection interpretation for selecting an interpreter includes information on a sex, an age, a habitation, a specialty, and a qualification.

By registering the interpretation level of an interpreter by language in the interpreter registration table, the user can select an interpreter of a desired level for an interpretation between specified languages. An interpreter can register a plirality of languages, if any, which he/she can provide. This allows flexible and efficient selection of an interpreter.

In a videophone interpretation system via bidirectional simultaneous interpretation, a listening comprehension level and a speaking level may be separately registered as interpretation levels by language to be registered in the interpreter registration table. By doing so, it is possible to individually select a person who is optimum as a first interpreter and another who is optimum as a second interpreter, thereby allowing flexible and efficient selection of an interpreter.

The videophone interpretation system according to claim 14 is the videophone interpretation system according to any one of claims 1 through 13, characterized in that an availability flag to indicate whether an interpreter is available is registered in the interpreter registration table and that the connection means includes a function to refer an availability flag in the interpreter registration table to extract the terminal number of an available interpreter.

In this way, by registering whether an interpreter is available in the interpreter registration table, an available interpreter is automatically selected and called. This eliminates useless calling and provides a more flexible and efficient videophone interpretation system.

The videophone interpretation system according to claim 15 is the videophone interpretation system according to any one of claims 1 through 14, characterized in that the connection means includes a function to generate a text message to be transmitted to each of the terminals and that the communication means includes a function to transmit the generated text message to each of the terminals.

This transmits a text message which prompts each terminal to enter necessary information when connecting a caller terminal, a callee terminal and an interpreter terminal.

The videophone interpretation system according to claim 16 is the videophone interpretation system according to any one of claims 1 through 15, characterized in that the connection means includes a function to generate a voice message to be transmitted to each of the terminals and that the communication means includes a function to transmit the generatedvoice message to each of the terminals.

This transmits a voice message to a caller terminal, a callee terminal and an interpreter terminal when the caller terminal, callee terminal and interpreter terminal are to be connected. This makes it possible to provide a videophone interpretation service even when any of the caller, the callee and the interpreter is a visually impaired person.

A videophone interpretation method according to claim 17 is the videophone interpretation system according to any one of claims 1 through 16, characterized in that the connection means includes a function to register a term used during a conversation based on a command from each of the terminals and a function to extract the registered term and generate a telop based on a command from each of the terminals and that the communication means includes a function to transmit the generated telop to each of the terminals.

In this way, by registering a term in advance that is difficult to interpret, it is possible to display a telop on each of the terminal and provide the videophone interpretation service which is more quickly and accurate.

A videophone interpretation method according to claim 18 is the videophone interpretation system according to any one of claims 1 through 17, characterized in that accounting information on an interpreter is registered in the interpreter registration table and that the connection means includes a function to measure the time that the caller terminal or callee terminal obtains an interpretation service and a function to calculate a fee from the measured time and accounting information registered in the interpreter registration table.

By registering the accounting information on an interpreter in the interpreter registration table, it is possible to account an appropriate fee for a videophone interpretation service.

The interpreter registration table may register the interpretation level of an interpreter by language and an accounting table which specifies the relationship between the interpretation level and the hourly rates may be used to determine accounting information. By doing so, it is possible to account an appropriate fee corresponding to the level of the interpreter.

A videophone interpretation method according to claim 19 is a videophone interpretation method where an interpreter interprets a videophone conversation between a caller and a callee using different languages, the method using an interpreter registration table where at least the language types interpretable by an interpreter and the terminal number of the interpreter are registered, characterized in that the method comprises steps of accepting a call from a caller terminal, acquiring the terminal number of a callee, language type of the caller and the language type of the callee from the caller terminal for which the call was accepted, extracting the terminal number of the interpreter by referencing the interpreter registration table from the acquired language type of the caller and language type of the callee, calling the interpreter terminal by using the terminal number of the interpreter extracted, calling the callee terminal by using the acquired terminal number of the callee, transmitting a video including at least a video from the callee terminal and an audio including at least an audio from the interpreter terminal to the caller terminal, transmitting a video including at least a video from the caller terminal and an audio including at least an audio from the interpreter terminal to the callee terminal, and transmitting an audio including at least an audio from the caller terminal and an audio from the callee terminal to the interpreter terminal.

With this configuration, upon a call from a caller terminal, the terminal number of an interpreter capable of interpreting between the language of the caller and the language of the callee is extracted from the interpreter registration table, and the caller terminal, the callee terminal and the interpreter terminal are automatically connected, and a video and an audio required for interpretation are communicated. The caller need not previously search for an interpreter and hold consultation with the callee thus providing a videophone interpretation service which may be available even in an emergency. The interpreter can join a videophone conversation anywhere he/she may be, as long as he/she can be called. This minimizes the restraint time of the interpreter and reduces the interpretation service cost.

A videophone interpretation method according to claim 20 is a videophone interpretation method where a videophone conversation between a caller and a callee using different languages is interpreted by a first interpreter who interprets the language of a callee into the language of a caller and a second interpreter who interprets the language of the caller into the language of the callee, the method using an interpreter registration table where at least the language types interpretable by an interpreter and terminal number of the interpreter are registered, characterized in that the method comprises steps of accepting a call from a caller terminal, acquiring the terminal number of a callee, language type of the caller and the language type of the callee from the caller terminal for which the call was accepted, extracting the terminal number of a first interpreter by referencing the interpreter registration table from the acquired language type of the callee and language type of the caller, calling the first interpreter terminal by using the terminal number of the first interpreter extracted, extracting the terminal number of a second interpreter by referencing the interpreter registration table from the acquired language type of the caller and language type of the callee, calling the second interpreter terminal by using the terminal number of the second interpreter extracted, calling the callee by using the acquired terminal number of the callee, transmitting a video including at least a video from the callee terminal and an audio including at least an audio from the first interpreter terminal to the caller terminal, transmitting a video including at least a video from the caller terminal and an audio including at least an audio from the second interpreter terminal to the callee terminal, transmitting an audio including at least an audio from the callee terminal to the first interpreter terminal, and transmitting an audio including at least an audio from the caller terminal to the second interpreter terminal.

With this configuration, upon a call from a caller terminal, the terminal number of a first interpreter who interprets the language of the callee to the language of the caller and the terminal number of a second interpreter who interprets the language of the caller into the language of the callee are extracted. The caller terminal, the callee terminal, the first interpreter terminal, and the second interpreter terminal are automatically connected, followed by communications of a video and an audio required for interpretation. The caller need not previously search for an interpreter and hold consultation with the callee thus providing a videophone interpretation service which may be available even in an emergency. The interpreter can join a videophone conversation anywhere he/she may be, as long as he/she can be called. This minimizes the restraint time of the interpreter and reduces the interpretation service cost.

The above object, other objects, characteristics and advantages of the invention will be apparent from the following detailed description of the embodiments of the invention.

### Brief Description of the Drawings

Fig. 1 is a system block diagram of a videophone interpretation system according to a first embodiment of the invention;
Fig. 2 shows an example of a video displayed on the screen of a terminal in the videophone interpretation system according to the first embodiment of the invention;
Fig. 3 shows an example of an interpreter registration table in the videophone interpretation system according to the first embodiment of the invention;
Fig. 4 is a processing flowchart of the control processing of a controller in the videophone interpretation system according to the first embodiment of the invention;
Fig. 5 shows an example of a screen for prompting input of the language type of a caller and a callee.
Fig. 6 shows an example of a screen for prompting input of interpreter selection conditions;
Fig. 7 shows an example of a screen for prompting input of the terminal number of a callee;
Fig. 8 is a system block diagram of a videophone interpretation system according to a second embodiment of the invention;
Fig. 9 shows an example of a connection table;
Fig. 10 is a processing flowchart of the control processing of a controller in the videophone interpretation system according to the second embodiment of the invention;
Fig. 11 is a system block diagram of a videophone interpretation system according to a third embodiment of the invention;
Fig. 12 shows an example of a video displayed on the screen of a terminal in the videophone interpretation system according to the third embodiment of the invention;
Fig. 13 shows an example of an interpreter registration table in the videophone interpretation system according to the third embodiment of the invention;
Fig. 14 is a processing flowchart of the control processing of a controller in the videophone interpretation system according to the third embodiment of the invention;
Fig. 15 is a block diagram of showing an example of an audio communications function in the videophone interpretation system according to the first embodiment of the invention;
Fig. 16 is a block diagram of showing another example of the audio communications function in the videophone interpretation system according to the first embodiment of the invention;
Fig. 17 is a block diagram of showing an example of the audio communications function in the videophone interpretation system according to the third embodiment of the invention;
Fig. 18 is a block diagram of showing another example of the audio communications function in the videophone interpretation system according to the third embodiment of the invention;
Fig. 19 is a block diagram of showing an example of a recording/reproduction function in the videophone interpretation system according to the first embodiment of the invention;
Fig. 20 is a block diagram of showing an example of a recording/reproduction function in the videophone interpretation system according to the third embodiment of the invention;
Fig. 21 shows an example of a video displayed on each terminal screen by way of the recording/reproduction function; and
Fig. 22 is a system block diagram of a p a videophone interpretation system using a videoconference service with a multipoint conferencing unit.

### Best Mode for Carrying Out the Invention

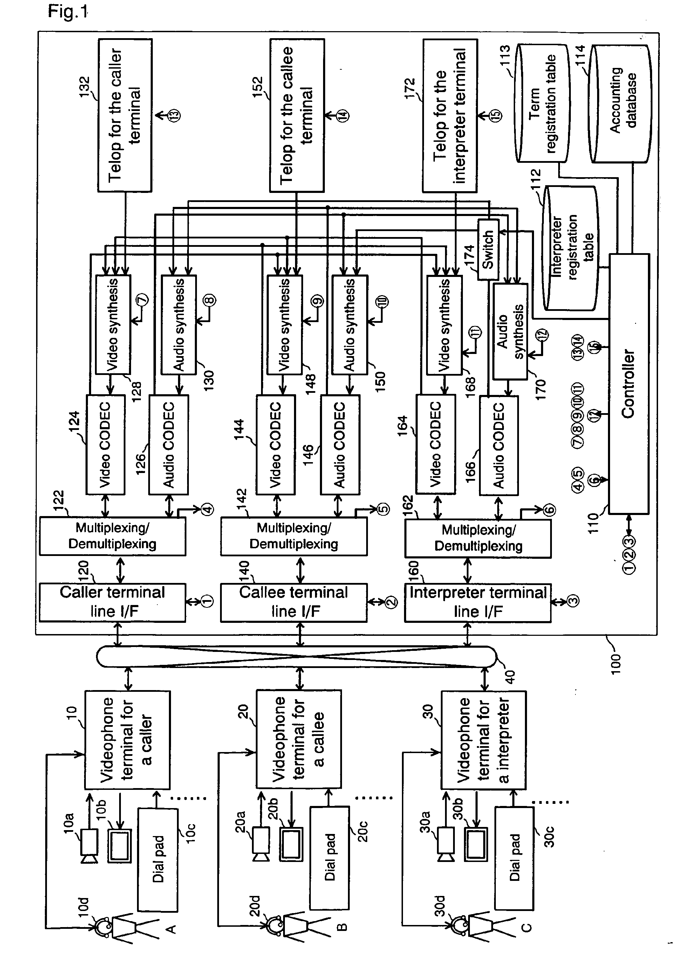

Fig. 1 is a system block diagram of a videophone interpretation system according to a first embodiment of the invention. This embodiment shows a system configuration example assuming that a terminal used by a caller, a callee or an interpreter is a telephone-type videophone terminal connected to a public telephone line.

In Fig. 1, a numeral 100 represents a videophone interpretation system installed in an interpretation center which provides an interpretation service. The videophone interpretation system 100 interconnects a videophone terminal used by a caller (hereinafter referred to as a caller terminal) 10, a videophone terminal used by a callee (hereinafter referred to as a callee terminal) 20, and a videophone terminal used by an interpreter (hereinafter referred to as an interpreter terminal) 30 via a public telephone line 40 in order to provides a videophone interpretation service where a videophone conversation between a caller and a callee is interpreted by an interpreter.

The caller terminal 10, callee terminal 20 and interpreter terminal 30 each comprises a television camera (a) for capturing each user, a display screen (b) for displaying the received video, a dial pad (c) for input of a number or information, and a headset (d) for audio input/output. While input/output of voice is not necessarily made using a headset but a handset on a typical telephone set may be used instead.

Such a videophone terminal connected to a public line may be an ISDN videophone terminal based on ITU-T recommendation H.320. The invention may use a videophone terminal which employs a unique protocol.

The public telephone line may be of a wireless type. The videophone terminal may be a cellular phone or a portable terminal equipped with a videophone function.

The interpretation videophone system 100 comprises a caller terminal line interface (interface being hereinafter referred to as I/F) 120 to connect to a caller terminal, a callee terminal line I/F 140 to connect to a callee terminal, and an interpreter terminal line I/F 160 to connect to an interpreter terminal. To each I/F, a multiplexer/demultiplexer 122, 142, 162 for multiplexing/demultiplexing a video signal, an audio signal or a data signal, a video CODEC (coder/decoder) 124, 144, 164 for compressing/expanding a video signal, and an audio CODEC 126, 146, 166 for compressing/expanding an audio signal are connected. Each line I/F, each multiplexer/demultiplexer, and each video CODEC or each audio CODEC performs call control, streaming control and compression/expansion of a video/audio signal in accordance with a protocol used by each terminal.

To the video input of the caller terminal video CODEC 124, a video synthesizer 128 for synthesizing the video output of the callee terminal video CODEC 144, the video output of the interpreter terminal video CODEC 164 and the output of the caller terminal telop memory 132 are connected. To the video input of the callee terminal video CODEC 144, a video synthesizer 148 for synthesizing the video output of the caller terminal video CODEC 124, the video output of the interpreter terminal video CODEC 164, and the output of the callee terminal telop memory 152 are connected.

To the video input of the interpreter terminal video CODEC 164, a video synthesizer 168 for synthesizing the video output of the caller terminal video CODEC 124, the video output of the callee terminal video CODEC 144, and the output of the interpreter terminal telop memory 172 are connected.

While video display of an interpreter may be omitted on a caller terminal or a callee terminal, understanding of the voice interpreted by the interpreter is made easy by displaying the video of the interpreter, so that it is preferable to be able to synthesize the video of an interpreter.

While video display of a caller or a callee may be omitted on an interpreter terminal, understanding of the voice interpreted by the interpreter is made easy by displaying the videos, so that it is preferable to be able to display the video of a caller or a callee.

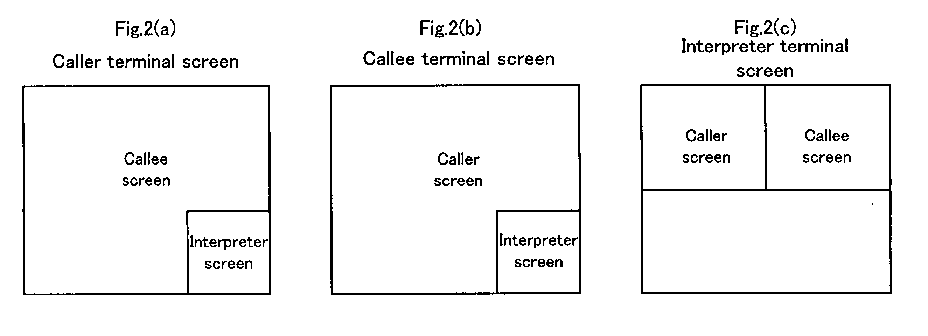

Fig. 2 shows an example of a video displayed on the screen of each terminal during a videophone conversation by way of the videophone interpretation system 100. Fig. 2(a) shows the screen of a caller terminal, on which a synthesized video of a callee and an interpreter obtained by the video synthesizer 128 is displayed. While the video of the callee is displayed as a main window and the video of the interpreter is displayed as a sub window in a Picture-in-Picture fashion in this example, a Picture-in-Picture display is also possible assuming the video of the interpreter as a main window and the video of the callee as a sub window. Or, these videos may be displayed in equal size. Fig. 2(b) shows the screen of a callee terminal, on which a synthesized video of a caller and an interpreter obtained by the video synthesized 148 is displayed. While the video of the caller is displayed as a main window and the video of the interpreter is displayed as a sub window in a Picture-in-Picture fashion in this example, a Picture-in-Picture display is also possible assuming the video of the interpreter as a main window and the video of the caller as a sub window. Or, these videos may be displayed in equal size. Fig. 2(c) shows the screen of an interpreter terminal, on which a synthesized video of a caller and a callee obtained by the video synthesizer 168 is displayed.

To the audio input of the caller terminal audio CODEC 126, an audio synthesizer 130 for synthesizing the audio output of the callee terminal audio CODEC 146 and the audio output of the interpreter terminal audio CODEC 166 are connected. To the audio input of the callee terminal audio CODEC 146, an audio synthesizer 150 for synthesizing the audio output of the caller terminal audio CODEC 126 and the audio output of the interpreter terminal audio CODEC 166 are connected.

To the audio input of the interpreter terminal audio CODEC 166, an audio synthesizer 170 for synthesizing the audio output of the caller terminal audio CODEC 126 and the audio output of the callee terminal audio CODEC 146 are connected.

The audio output of the interpreter terminal audio CODEC 166 is input to a selector 174. Based on a command from an interpreter terminal, the audio output is supplied to the caller terminal audio synthesizer 130 in case the interpreter interprets the language of the callee to the language of a caller, and to the callee terminal audio synthesizer 150 in case the interpreter interprets the language of a caller to the language of the callee. As a result, the audio of the interpreter is transmitted to either the caller or the callee requiring the audio. Thus, it is possible to prevent the speech of a caller or a callee from being disturbed by the unnecessary voice of an interpreter, thereby providing a smooth conversation.

The caller terminal audio synthesizer 130 is equipped with a function to suppress an audio level from the callee terminal or switch an audio from the callee terminal to an audio from the interpreter terminal when an audio from the interpreter terminal is detected. The callee terminal audio synthesizer 150 is equipped with a function to suppress an audio level from the caller terminal or switch an auido from the callee terminal to an audio from the interpreter terminal when an audio from the interpreter terminal is detected. This prevents overlapping of the audio of the interpretation by the interpreter over the audio of the opponent party which causes difficulty in listening. The interpreter can simultaneously interpret the speech of the speaker thus allowing a speedy and precise interpretation.

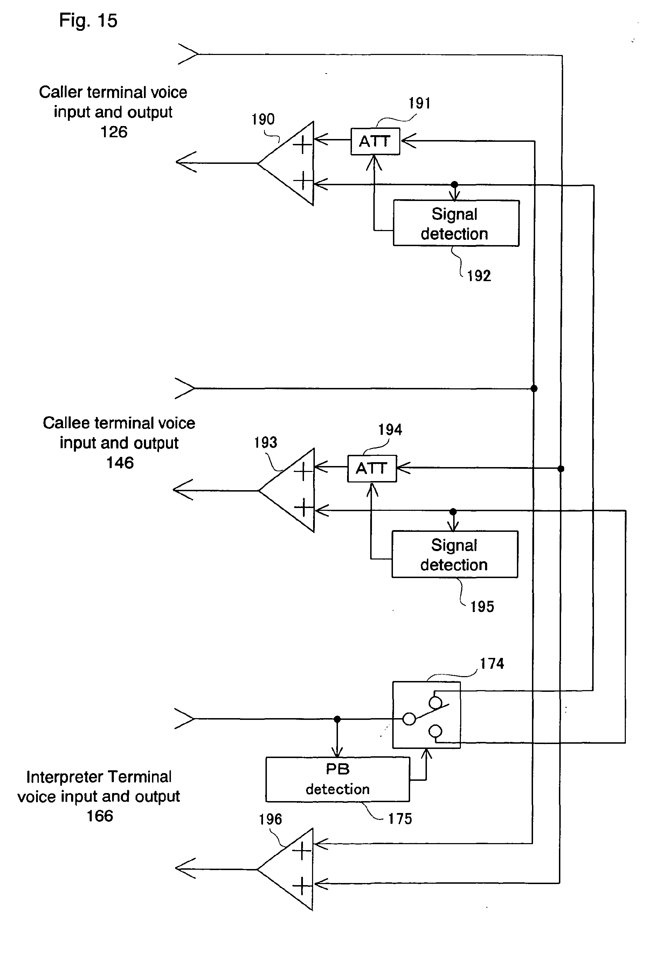

Fig. 15 shows specific examples of the function to switch the destination of the interpreter audio in the selector 174 and the function to suppress the audio of the callee or caller in the audio synthesizers 130, 150. As shown in Fig. 15, the audio output of the interpreter terminal audio CODEC 166 is connected to a caller terminal audio signal adder 190 and an callee terminal audio signal adder 193 via the switch 174. The audio of the interpreter is supplied to either the caller of callee by a signal from a PB detector 175. The PB detector 175 detects a predetermined number for selecting a caller or a callee on the dial pad of a terminal is pressed based on a data signal or a tone signal included in an audio signal from the interpreter terminal, and switches the selector 174 into the specified side. The interpreter specifies the caller or callee as a destination of his/her voice by the dial pad before he/she interprets. Thus, the caller or the callee who need not listen to the audio of the interpreter does not receive the audio of the interpreter.

To the caller terminal audio signal adder 190 is connected the audio output of the callee terminal audio CODEC 146 is connected via an attenuator 191, which attenuates the audio from the callee terminal when the audio from the interpreter is detected by the signal detector 192. To the callee terminal audio signal adder 193, the audio output of the caller terminal audio CODEC 126 is connected via an attenuator 194, which attenuates the audio from the caller terminal when the audio of the interpreter is detected by the signal detector 195. The signal detectors 192, 195 are set to an appropriate detection level in order to prevent the audio of the opponent party from being attenuated by mistake due to a noise and the like.

In order to ensure that the caller or the callee can hear the audio of the interpreter immediately after the audio of the interpreter is detected by the signal detector 192, 195, an appropriate signal delay unit may be provided at the interpreter audio input of the audio signal adder 190, 193.

While the audio of the opponent party is attenuated by the attenuator 191, 194 so that the caller or the callee can hear the original voice of the opponent party to some extent in the background of the audio of the interpreter in this embodiment, a switch may be used instead to shut off the audio of the opponent party.

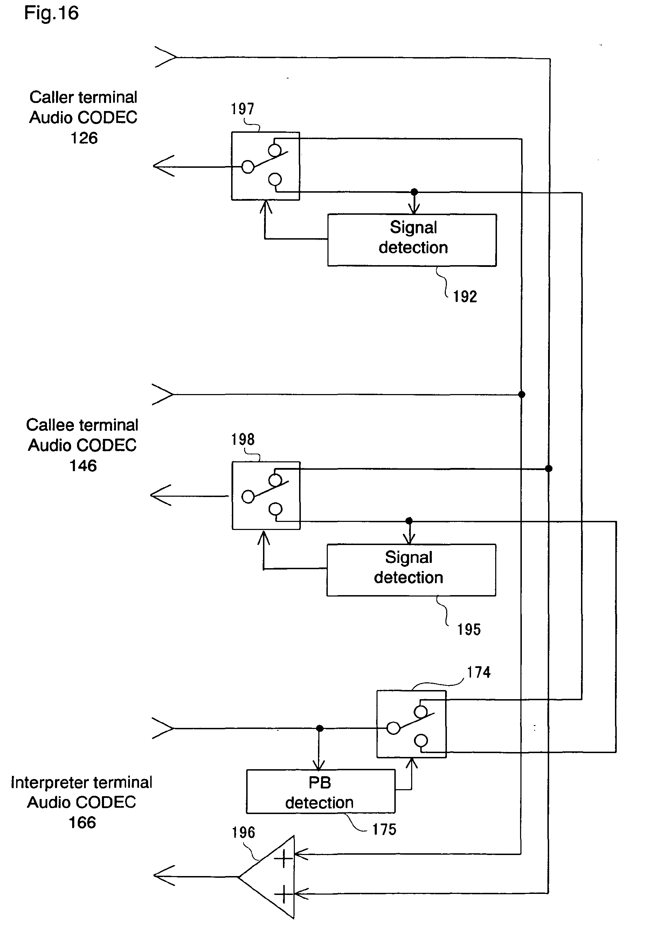

Fig. 16 shows an example where the audio of the opponent party is shut off when the audio of the interpreter is transmitted and only the audio of the interpreter is transmitted. As shown in Fig. 16, switches 197, 198 are used instead of the audio signal adders 190, 193. When the audio of the interpreter is detected by the signal detectors 192, 195, the switches 197, 198 are turned from the audio of the opponent party to the audio of the interpreter. The remaining configuration is the same as that shown in Fig. 15.

In this case also, in order to ensure that the caller or the callee can hear the audio of the interpreter immediately after the audio of the interpreter is detected by the signal detector 192, 195, an appropriate signal delay unit may be provided at the interpreter audio input of the switches 197, 198.

While the audio signal adder 190, 193 simply adds the audio of the interpreter and the audio of the opponent party in the above example, audio multiplexing of two signals may be employed as well. For example in case a terminal supports a stereophonic audio, a stereophonic synthesis is performed to the audio of the opponent party as the left channel and the audio of the interpreter as the right channel and the resultant signal is transmitted to a terminal, where the receiving party selects a necessary audio. In this configuration, it is not necessary to provide an attenuator to attenuate the audio of the opponent party in the videophone interpretation system. The receiving party listens to the audios while adjusting the volume balance of the right and left channels of a headset.

While the audio of the interpreter is transmitted to either the caller or the callee as selected by the switch 174 in the above example, the audio of the interpreter may be supplied to each of the audio signal adder 190 (or the switch 197) and the audio signal adder 193 (or the switch 198) via an attenuator in order to attenuate an audio signal to a party where the audio is not required based on detection by the PB detector 175. In this way, some of the audio of the interpreter is transmitted to the speaker by using an attenuator. The speaker thus checks that his/her speech is interpreted while he/she is speaking.

The videophone interpretation system 100 is equipped with an interpreter registration table 112 where the terminal number of an interpreter is registered and includes a controller 110 connected to each of the line I/Fs 120, 140, 160, multiplexers/demultiplexers 122, 142, 162, video synthesizers 128, 148, 168, audio synthesizers 130, 150, 170, and telop memories 132, 152, 172. The controller 110 provides a function to connect a caller terminal, a callee terminal and an interpreter terminal by way of a function to accept a call from a caller terminal, a function to acquire the language type of the caller and the language type of the callee, a function to acquire the selection conditions for selecting an interpreter, a function to extract the terminal number of the interpreter by referencing the interpreter registration table 112 by using the acquired language type and selection conditions, a function to call the interpreter terminal by using the terminal number of the interpreter extracted, and a function to call the callee terminal by using the acquired terminal number of the callee.

Operation of the video synthesizers 128, 148, 168 and audio synthesizers 130, 150, 170 is controlled by the controller 110. A function is included where the user changes the video output method or audio output method by pressing a predetermined number button of a dial pad of each terminal. This is implemented that the multiplexer/demultiplexer 122, 142, 162 detects the number button on the dial pad of each terminal is pressed based on a data signal or a tone signal and signals the detection to the controller. This ensures flexibility in the usage of the system on each terminal. For example, only necessary videos or audios are selected and displayed/output in accordance with the object or it is possible to replace a main window with a sub window, or change the position of the sub window.

To the input of the audio synthesizers 128, 148, 168, a caller terminal telop memory 132, a calee terminal telop memory 152, and a interpreter terminal telop memory 172 are connected respectively. Contents of each telop memory 132, 152, 172 can be set from the controller 110. With this configuration, by setting a message to be displayed on each terminal to the telop memory 132, 152, 172 and issuing a command to select a signal of the telop memory 132, 152, 172 to the audio synthesizer 128, 148, 168 in the setup of a videophone conversation via interpretation, it is possible to transmit necessary messages to respective terminals to establish a three-way call.

In case there is a term which is difficult to explain or a word which is difficult to pronounce in a videophone conversation, it is possible to register in advance the term in the term registration table 113 of the controller 110 in association with the number of the dial pad on each terminal. By doing so, it is possible to detect that the dial pad on each terminal is pressed during a videophone conversation by using a data signal or a tone signal on the multiplexer/demultiplexer 122, 142, 162, extract a term corresponding to the number of the dial pad pressed from the term registration table 113, generate a text telop, and set the text telop to each telop memory, thereby displaying the term on each terminal. This communicates, by way of a text telop, to the opponent party a term which is difficult to explain or a word which is difficult to pronounce, thus providing a speedier and more precise videophone conversation.

Next, the connection processing by the controller 110 for establishing a videophone conversation via interpretation is described.

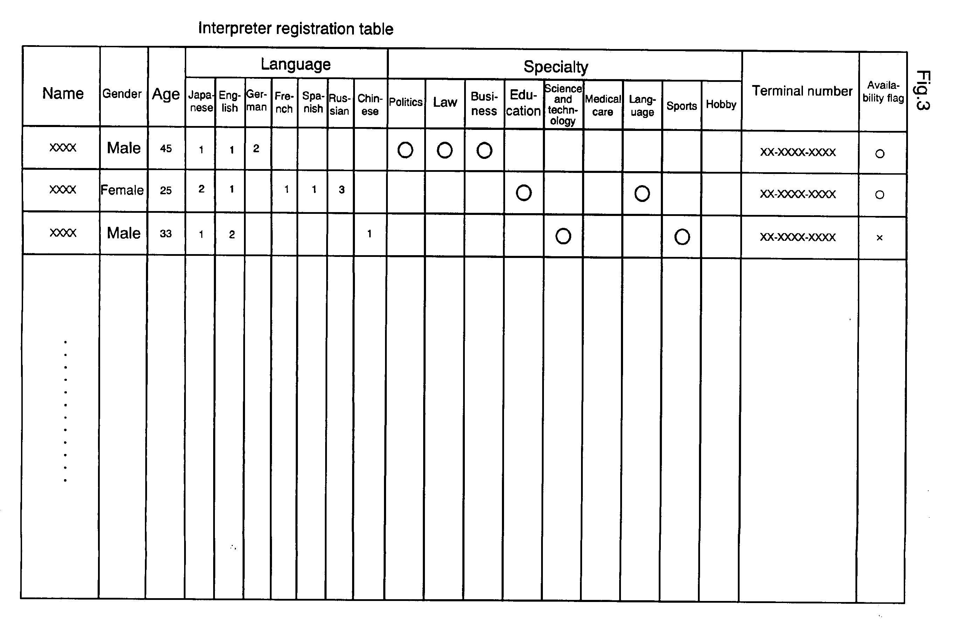

Prior to processing,an interpreter selection information and a terminal number of a terminal used by each interpreter are registered in the interpreter registration table 112 of the controller 110 from an appropriate terminal (not shown). Fig. 3 shows an example of registration item to be registered in the interpreter registration table 112. The interpreter selection information is information for selecting a interpreter desired by a user, which includes a gender, an age, supported languages, a habitation, a specialty, and the like. For the supported languages, the level of an interpreter is registered by language to allow the user to select an interpreter of a desired level between the target languages. In this example, the levels of interpretation are represented by 1 (Advanced), 2 (Middle) and 3 (Basic). The habitation assumes a case where the user desires a person who has geographic knowledge on a specific area and, in this example, a ZIP code is used to specify an area. The specialty assumes a case where, in case the conversation pertains to a specific field, the user desires a person who has expert knowledge on the field or is familiar with the topics in the field. In this example, the fields an interpreter is familiar with are classified into several categories to be registered, such as politics, law, business, education, science and technology, medical care, language, sports, and hobby. The specialties are diverse, so that they may be registered hierarchically and searched through at a level desired by the user when selected.

In addition, qualifications of interpreter may be registered in advance so that the user can select a qualified person as an interpreter.

The terminal number to be registered is the telephone number of the terminal, because in this example a videophone terminal to connect to a public telephone line is assumed.

In the interpreter registration table 112 is provided an availability flag to indicate whether an interpreter accepts interpretation. A registered interpreter can call the interpretation center from his/her terminal and enter a command by using a dial pad to set/reset the availability flag. Thus, an interpreter registered in the interpreter registration table can set the availability flag only when he/she is available for interpretation, thereby eliminating useless calling and allowing the user to select an available interpreter without delay.

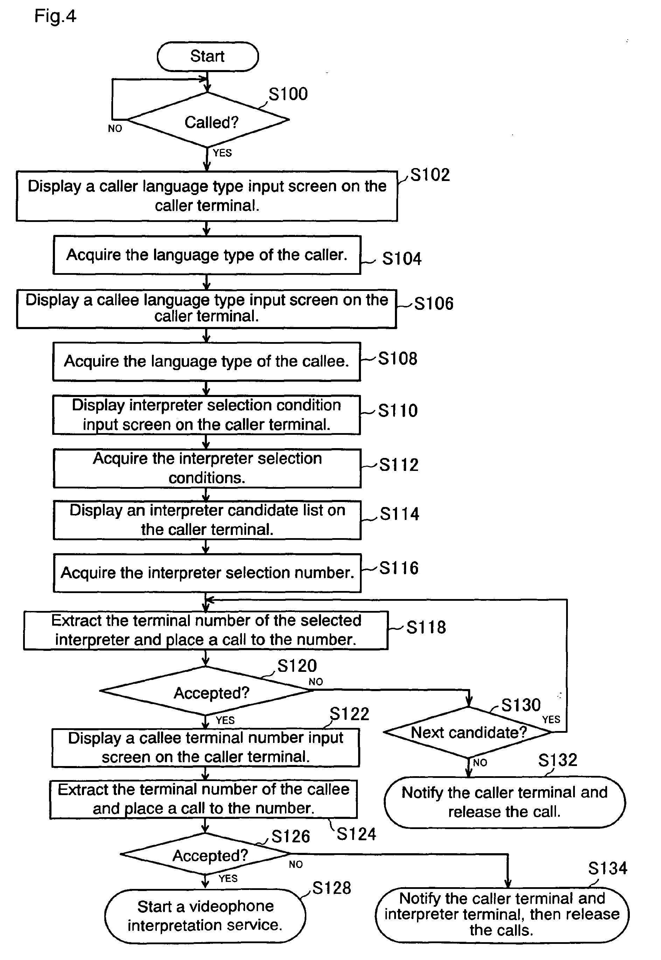

Fig. 4 shows a processing flowchart of the connection processing by the controller 110. The videophone interpretation system 100 accepts an order for an interpretation service when the caller calls a telephone number of the caller terminal line I/F. The videophone interpretation system 100 then calls the interpreter terminal and the callee terminal, and establishes a connection for the videophone interpretation service.

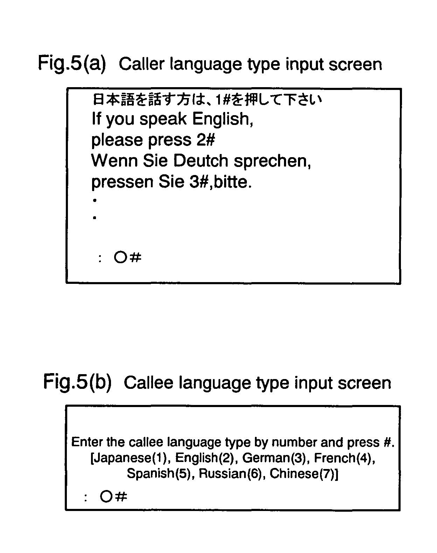

As shown in Fig. 4, the presence of a call to the caller terminal line I/F 120 is detected initially (S100). When a call is detected, a screen to prompt input of the language type of the caller is displayed on the caller terminal (S102). This is accomplished for example by setting a message shown in Fig. 5(a) to the caller terminal telop memory 132. The language type of the caller input by the caller is acquired (S104). Afterwards, messaging to the caller terminal and the interpreter terminal is made using the language type of the caller acquired. Next, a screen to prompt input of a language type of the callee is displayed on the caller terminal (S106). This is accomplished for example by setting a message shown in Fig. 5(b) to the caller terminal telop 132. The language type of the callee input by the caller is acquired (S108). Afterwards, messaging to the callee terminal is made using the language type of the callee acquired.

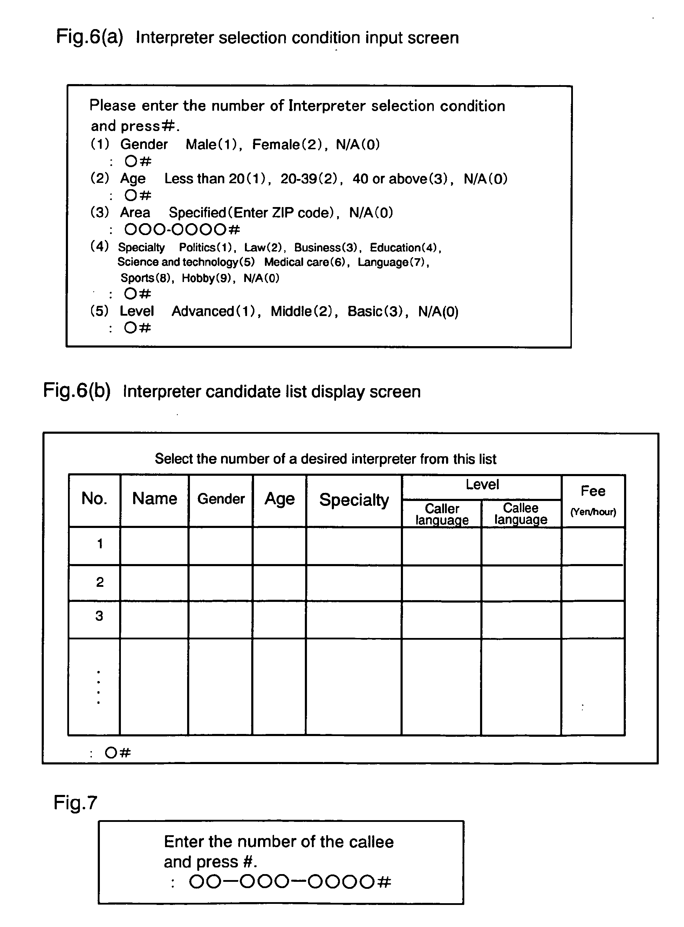

A screen to prompt input of interpreter selection conditions is displayed on the caller terminal (S110). This is accomplished for example by setting a message shown in Fig. 6 (a) to the caller terminal telop memory 132. The interpreter selection conditions input by the caller are acquired (S112). The interpreter selection conditions input by the caller are a gender, an age bracket, an area, a specialty and an interpretation level. The area is specified by using a ZIP code and an interpreter is selected starting with the habitation closest to the specified area. For any selections, in case it is not necessary to specify a condition, N/A may be selected.

Next, an interpreter who has a specified interpretation level of the language of the caller and the language of the callee, and whose gender, age, habitation and specialty satisfy the acquired selection conditions, with his/her availability flag being set is extracted referring to the interpreter registration table 112, and the caller terminal displays a list of interpreter candidates to prompt input of the selection number of a desired interpreter (S114). This is accomplished for example by setting a message and an interpreter list shown in Fig. 6(a) to the caller terminal telop memory 132. In this practice, the hourly rates of the interpreter (not shown) registered in the interpreter registration table 112 is extracted and displayed as a fee. This allows the user to consider the cost of the interpretation service before selecting an appropriate interpreter. The hourly rates of the interpreter may be determined from the interpretation level of the selected interpreter by referencing an accounting table which specifies the relationship between the interpretation level and the hourly rates. The selection number input by the caller referring to the interpreter candidate list is acquired (S116). The terminal number of the selected interpreter is extracted from the interpreter registration table 112 and called (S118). Personal information on a caller, language types of the caller and callee, and interpreter selection conditions may be communicated to the interpreter terminal by using the interpreter terminal telop memory 172 so as to accept the interpretation. Personal information on the caller may be available for example from pre-registered member information for the interpretation service being a membership service.

When a response is received from the interpreter terminal (S120), a screen to prompt input of the terminal number of the callee is displayed on the caller terminal (S122). This is accomplished for example by setting a message shown in Fig. 7 to the caller terminal telop memory 132. The terminal number of the callee input by the caller is extracted and the callee is called (S124). Same as the above procedure, personal information on a caller, language types of the caller and callee, and interpreter selection conditions may be communicated to the callee terminal by using the callee terminal telop memory 152 so as to confirm whether to accept the call and an error in the set conditions, if any.

When a response is received from the callee terminal (S126), a videophone interpretation service starts (S128).

In case a response is not received from the interpreter terminal in S120, whether another candidate is available is determined (S130). In case another candidate is available, execution returns to S118 and the procedure is repeated. In case another candidate is unavailable, the caller terminal is notified as such and the call is released (S132). In case a response is not received from the callee terminal in S126, the caller terminal and the selected interpreter terminal are notified as such and the call is released (S134).

The controller 110 has a timer (not shown) for calculating the fee of the interpretation service. The timer measures the time from when the connection is established to when it is released. On completion of an interpretation service, the fee is calculated from the time measured by the timer and the hourly rates mentioned above and registered in a accounting database 114, and charged to the user later.

While in case the selected interpreter terminal does not accept the call, the caller is simply notified as such and the call is released in the above embodiment, an interpretation reservation table to register a caller terminal number and a callee terminal number may be provided and the caller and the callee may be notified on a later response from the selected interpreter to set a videophone conversation.

While the caller is prompted to input the language types of the caller and the callee for selection of an interpreter in this embodiment, a telephone number of an interpretation center may be specified per language type of the caller or per combination of the language type of the caller and the language type of the callee in order to acquire the language type of the caller or the callee. While the caller is prompted to input the interpreter selection conditions for selecting an interpreter in this embodiment, the caller may be first inquired of whether to specify the interpreter selection conditions, and in case he/she has determined not to specify the interpreter selection conditions, only the input language types may be used to select an interpreter.

Configuration is allowed where, in an emergency, the caller first dials a specific number to automatically call an interpreter dedicated to an emergency case.

While the videophone interpretation system 100 comprises a line I/F, a multiplexer/demultiplexer, a video CODEC, an audio CODEC, a video synthesizer, an audio synthesizer and a controller in the above embodiment, these components need not be implemented by individual hardware (H/W) but the function of each component may be implemented by software processing running on a computer.

While the interpreter terminal 30, same as the caller terminal 10 and the callee terminal 20, is located outside the interpretation center and called from the interpretation center over a public telephone line to provide an interpretation service in the above embodiment, the invention is not limited thereto but some or all of the interpreter terminals may be installed in the interpretation center so that the interpretation services are provided from the interpretation center.

In the above embodiment, an interpreter can join an interpretation service anywhere he/she may be, as long as he/she has a terminal which can be connected to a public telephone line. Thus the interpreter can provide an interpretation service by using the availability flag to make efficient use of free time. This allows efficient and stably operation of interpretation services which often have difficulty in securing necessary personnel.

While a video signal of the home terminal is not input to the video synthesizers 128, 148, 168 in the above embodiment, a function may be provided to input the video signal of the home terminal and synthesize and display to check the video on the terminal.

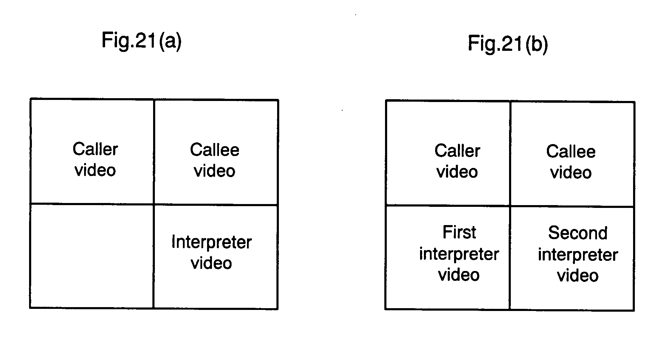

While the video synthesizers 128, 148, 168 are used to synthesize videos for each terminal in the above embodiment, the invention is not limited thereto but videos from all terminals may be synthesized at once and the resultant may be transmitted to each terminal. In this case, as shown in Fig. 21(a) for example, a video of the caller, a video of the callee and a video of the interpreter may be displayed in a four split screen.

While a function is provided whereby the telop memories 132, 152, 172 are provided and their outputs are added to the corresponding video synthesizers 128, 148, 168 respectively in order to display a text telop on each terminal in the above embodiment, a function may be provided whereby telop memories to store audio information are provided and each output is added to the audio synthesizers 130, 150, 170 in order to output an audio message on each terminal. This makes it possible to provide a videophone interpretation service even in case any of the caller, the callee or the interpreter is a visually impaired person.

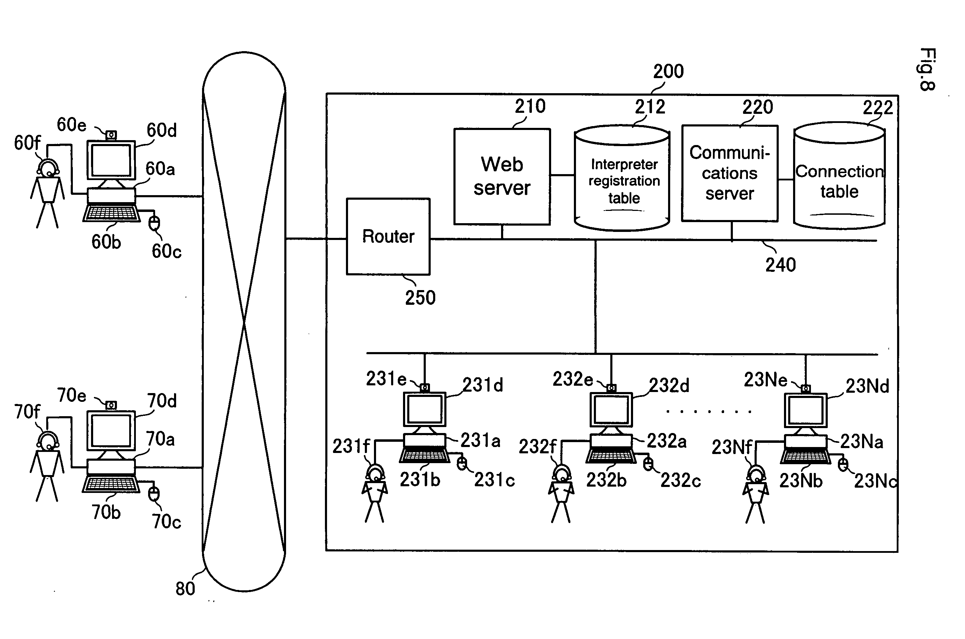

Fig. 8 is a system block diagram of a videophone interpretation system according to a second embodiment of the invention. In this embodiment, the system configuration example includes the terminals used by a caller, a callee and an interpreter are IP(Internet Protocol) type videophone terminals to be connected to the Internet equipped with a web browser.

In Fig. 8, a numeral 200 represents a videophone interpretation system installed in an interpretation center to provide an interpretation service. The videophone interpretation system 200 connects a caller terminal 60 used by a caller, a callee terminal 70 used by a callee, and any of the interpreter terminals used by an interpreter 231, 232,... via the Internet 80 in order to provide a videophone interpretation service to the caller and the callee.

While the caller terminal 60, the callee terminal 70 and the interpreter terminal 231, 232,... each comprises a general-purpose processing device (a) such as a personal computer having a video input I/F function, an audio input/output I/F function and a network connection function, the processing device equipped with a keyboard (b) and a mouse (c) for input of information as well as a display (d) for displaying a web page screen presented by a web server 210 and a videophone screen supplied by a communications server 220, a television camera (e) for capturing the video of a each terminal user, and a headset (f) for performing audio input/output for each terminal user, and the processing device has IP videophone software and a web browser installed in this example, a dedicated videophone terminal may be used instead.

The videophone terminal connected to the Internet may be an IP videophone terminal based on ITU-T recommendation H.323, the invention is not limited thereto but may use a videophone terminal which employs a unique protocol.

The Internet may be of a wireless LAN type. The videophone terminal may be a cellular phone or a portable terminal equipped with a videophone function and also including a web access function.

The videophone interpretation system 200 comprises: a communications server 220 including a connection table 222 for setting the terminal addresses of a caller terminal, a callee terminal and an interpreter terminal as well as a function to interconnect the terminals registered in the connection table 222 and synthesize a video and an audio received from each terminal and transmit the synthesized video and audio to each terminal; a web server 210 including an interpreter registration table 212 for registering the interpreter selection information, terminal address and availability flag of each interpreter as mentioned earlier, as well as a function to select a desired interpreter based on an access from a caller terminal by using a web browser and set the terminal address of each of the caller terminal, the callee terminal and interpreter terminal in the connection table 222 of the communications server 220; a router 250 for connecting the web server 210 and the communications server 220 to the Internet; and a plurality of interpreter terminals 231, 232,..., 23N connected to the communications server 220 via a network.

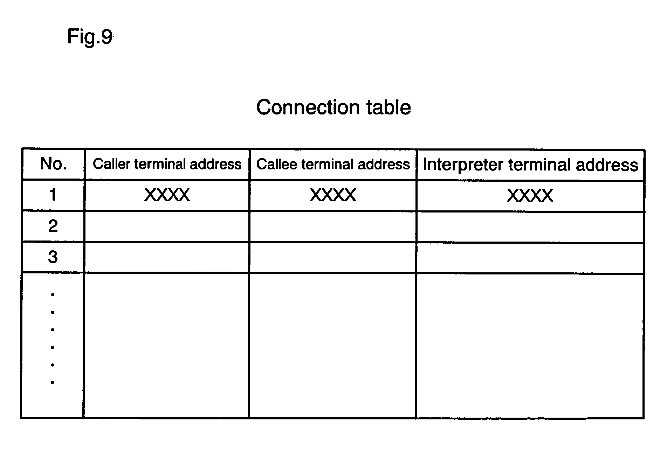

Fig. 9 shows an example of a connection table 222. As shown in Fig. 9, the terminal address of a caller terminal, the terminal address of a callee terminal and the terminal address of an interpreter terminal are registered as a set in the connection table 222. This provides a single interpretation service. The connection table 222 is designed to register a plurality of such terminal address sets depending on the throughput of the communications server 220, thereby simultaneously providing a plurality of interpretation services.

While the terminal address registered in the connection table 222 is an address on the Internet and is generally an IP address, the invention is not limited thereto but for example a name given by a directory server may be used.

The communications server 220 performs packet communications using a predetermined protocol with the caller terminal, the callee terminal and interpreter terminal set to the connection table 222 and provides, by way of software processing, the functions similar to those provided by a multiplexer/demultiplexer 122, 142, 162, a video CODEC 124, 144, 164, an audio CODEC 126, 146, 166, a video synthesizer 128, 148, 168, an audio synthesizer 130, 150, 170 in the videophone interpretation system 100.

With this configuration, same as the videophone interpretation system 100, prescribed videos and audios are communicated between a caller terminal, a callee terminal and an interpreter terminal, and a videophone interpretation service is provided between the caller and the callee.

While the videophone interpretation system 100 uses the controller 110 and the telop memories 132, 152, 172 to extract a term registered in the term registration table 113 during a videophone conversation by a command from a terminal and displays the term as a telop on the terminal, the same function may be provided by way of software processing by the communications server 220 in this embodiment also. A term specified by each terminal may be displayed as a popup message on the other terminal by way of the web server 210. Or, a telop memory may be provided in the communications server 220 and a term specified by each terminal may be written into the telop memory via the web server 210 to display a text telop on each terminal.

While the aforementioned interpretation center uses the controller 110 to interconnect a caller terminal, a callee terminal and an interpreter terminal, the connection procedure is made by the web server 210 in this embodiment because each terminal has a web access function.

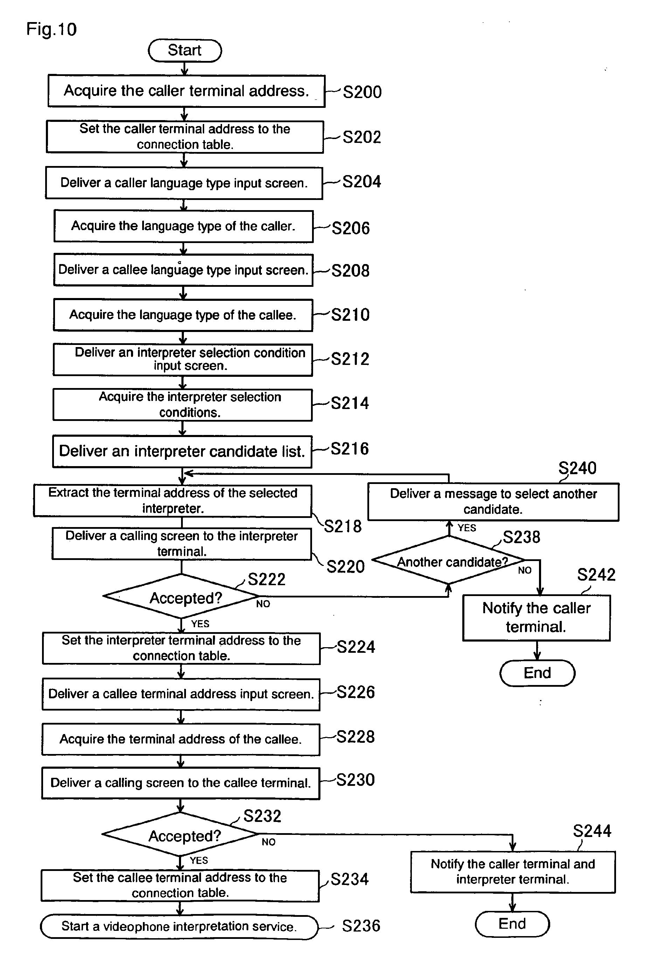

Fig. 10 is a processing flowchart of a connection procedure by the web server 210. In the videophone interpretation system 200, a caller terminal may access and log into the web server 210 in the interpretation center, which starts the acceptance of the interpretation service.

As shown in Fig. 10, the web server 210 first acquires the terminal address of a caller (S200) and sets the terminal address to the connection table 222 (S202). Next, the web server delivers a screen to prompt input of the language type of the caller similar to that shown in Fig. 5(a) (S204) to the caller terminal. The language type of the caller input by the caller is acquired (S206). The web server delivers a screen to prompt input of the language type of the callee similar to that shown in Fig. 5(b) (S208) to the caller terminal. The language type of the callee input by the caller is acquired (S210). The web server delivers a screen to prompt input of the selection conditions similar to that shown in Fig. 6(a) to the caller terminal (S212). The interpreter selection conditions input by the caller are acquired (S214).

Next, an interpreter with availability flag set is selected from among the interpreters satisfying the language type and selection conditions referring to the interpreter registration table 212. The web server 210 delivers a list of interpreter candidates similar to that shown in Fig. 6(b) to the caller terminal to prompt input of the selection number of a desired interpreter (S216). The selection number of the interpreter input by the caller is acquired and the terminal address of the selected interpreter is acquired from the interpreter registration table 212 (S218). Based on the acquired terminal address of the interpreter, the web server 210 delivers a calling screen to the interpreter terminal (S220). In case the call is accepted by the interpreter (S222), the terminal address of the interpreter is set to the connection table 222 (S224). The web server 210 delivers a screen to prompt input of the terminal address of the callee similar to that shown in Fig. 7 to the caller terminal (S226). The terminal address of the callee input by the caller is acquired (S228). Based on the acquired terminal address of the callee, the web server 210 delivers a calling screen to the callee terminal (S230). In case the call is accepted by the callee terminal (S232), the callee terminal address is set to the connection table 222 (S234). Then, a videophone interpretation service starts (S236).

In case the interpreter terminal does not accept the call in S222, whether another candidate is available is determined (S238). In case another candidate is available, the web server delivers a message to prompt the caller to select another candidate to the caller terminal (S240), then execution returns to S218. In case another candidate is not found, the web server notifies the caller terminal as such (S242) and the call is released. In case the callee terminal does not accept the call in S232, the caller terminal and the selected interpreter terminal are notified as such (S244) and the call is released.

While in case the selected interpreter terminal does not accept the call, the caller is notified as such and the call is released in the above embodiment, an interpretation reservation table to register a caller terminal address and a callee terminal address may be provided and the caller and the callee may be notified on a later response from the selected interpreter to set a videophone interpretation service.

While the interpreter terminal is located in the videophone interpretation system 200 of the interpretation center in the above embodiment, the invention is not limited thereto but some or all of the interpreters may be installed outside the interpretation center and connected via the Internet. Theses terminals may be addressed by the same processing.

In the above embodiment, the configuration of the videophone interpretation system has been described for a case where a videophone terminal used by a caller, a callee or an interpreter is a telephone-type videophone terminal connected to a public telephone line and a case where the videophone terminal is an IP-type videophone terminal connected to the Internet, the telephone-type videophone terminal and the IP-type videophone terminal can communicate with each other by arranging a gateway to perform protocol conversion therebetween. A videophone interpretation system conforming to one protocol may be provided to support a videophone terminal which uses another protocol.

In this way, the videophone interpretation system allows the user to enjoy or provide an interpretation service anywhere he/she may be, as long as he/she has a terminal which can be connected to a public telephone line or the Internet. An interpreter does not always have to visit an interpretation center but can join a conversation via interpretation from his/her home or a facility or site where a videophone terminal is located, or provide an interpretation service by using a cellular phone or a portable terminal equipped with a videophone function.

A person with the ability of interpretation may wish to register in the interpreter registration table in the interpretation center in order to provide an interpretation service anytime when it is convenient to him/her. From the viewpoint of the operation of the interpretation center, it is not necessary to summon interpreters to the center. This allows efficient operation of the interpretation center both in terms of time and costs.

While one interpreter performs both interpretation from the language of the callee into the language of the caller and interpretation from the language of the caller into the language of the callee in the above embodiment, a first interpreter to interpret the language of the callee into the language of the caller and a second interpreter to interpret the language of the caller into the language of the callee may be individually set to perform a bidirectional simultaneous interpretation.

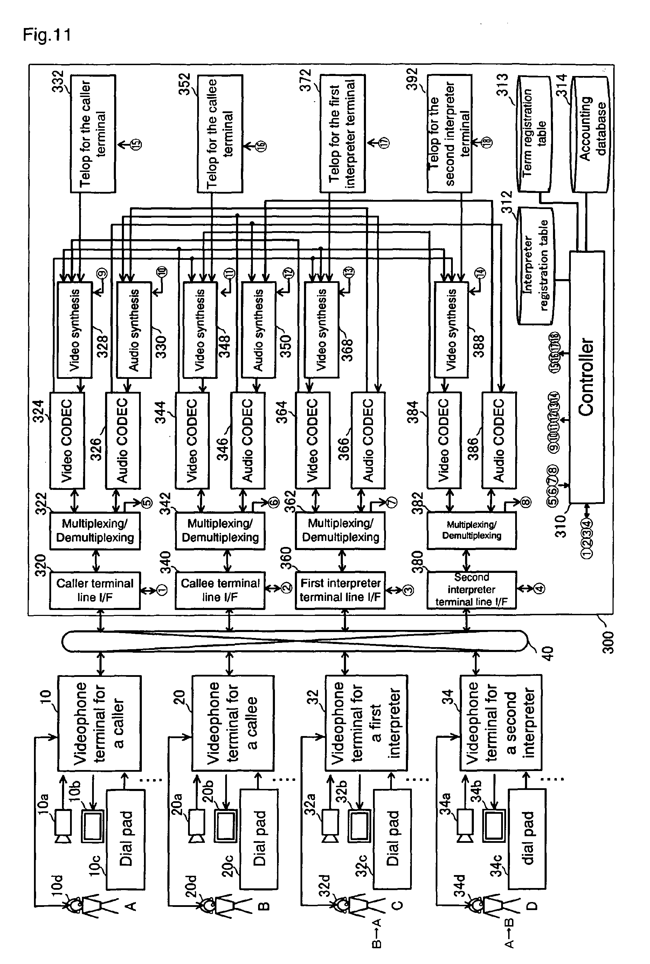

Fig. 11 shows an example of the system configuration of a videophone interpretation system which provides a bidirectional simultaneous interpretation according to a third embodiment of the invention. While this example uses a telephone-type videophone, an IP-type videophone may be used instead as mentioned above.

In Fig. 11, a numeral 300 represents a videophone interpretation system installed in an interpretation center which provides a bidirectional simultaneous interpretation service. The videophone interpretation system 300 interconnects a videophone terminal used by a caller (hereinafter referred to as a caller terminal) 10, a videophone terminal used by a callee (hereinafter referred to as a callee terminal) 20, a videophone terminal used by a first interpreter (hereinafter referred to as a first interpreter terminal) 32, and a videophone terminal used by a second interpreter (hereinafter referred to as a second interpreter terminal) 34 via a public telephone line 40 in order to provide a videophone interpretation service where a videophone conversation between a caller and a callee is interpreted by the first interpreter and the second interpreter.

The videophone interpretation system 300 comprises a caller terminal line I/F 320, a callee terminal line I/F 340, a first interpretation terminal line I/F 360 and a second interpretation terminal line I/F 380. To each I/F a multiplexer/demultiplexer 322, 342, 362, 382 for multiplexing/demultiplexing a video signal, an audio signal or a data signal, a video CODEC (coder/decoder) 324, 344, 364, 384 for compressing/expanding a video signal, and an audio CODEC 326, 346, 366, 386 for compressing/expanding an audio signal are connected. Each line I/F, each multiplexer/demultiplexer, and each video CODEC or each audio CODEC performs call control, streaming control and compression/expansion of a video/audio signal in accordance with a protocol used by each terminal.

To the video input of the caller terminal video CODEC 324, a video synthesizer 328 for synthesizing the video output of the callee terminal video CODEC 344, the video output of the first interpreter terminal video CODEC 364 and the output of the caller terminal telop memory 332 is connected.

To the video input of the callee terminal video CODEC 344, a video synthesizer 348 for synthesizing the video output from the caller terminal video CODEC 324, the video output from the second interpreter terminal video CODEC 384, and the output of the callee terminal telop memory 352 is connected.

To the video input of the first interpreter terminal video CODEC 364, a video synthesizer 368 for synthesizing the video output of the caller terminal video CODEC 324, the video output of the callee terminal video CODEC 344, and the output of the first interpreter terminal telop memory 372 is connected.

To the video input of the second interpreter terminal video CODEC 384, a video synthesizer 388 for synthesizing the video output of the callee terminal video CODEC 344, the video output of the caller terminal video CODEC 324, and the output of the second interpreter terminal telop memory 392 is connected.

While video display of a first interpreter or a second interpreter may be omitted on a caller terminal or a callee terminal, understanding of the voice interpreted by the interpreter is made easy by displaying the video of the interpreter, so that it is preferable to be able to synthesize the video of an interpreter.

While video display of a caller or a callee may be omitted on a first interpreter terminal or a second interpreter terminal, understanding of the voice interpreted by the interpreter is made easy by displaying the videos, so that it is preferable to be able to display the video of a caller or a callee.

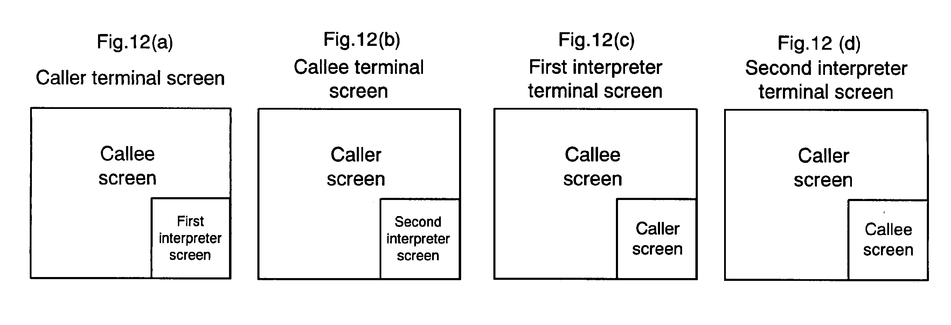

Fig. 12 shows an example of a video displayed on the screen of each terminal during a videophone conversation by way of the videophone interpretation system 300. Fig. 12(a) shows the screen of a caller terminal, on which a synthesized video of a caller and a first interpreter obtained by the video synthesizer 328 is displayed. While the video of the callee is displayed as a main window and the video of the first interpreter is displayed as a sub window in a Picture-in-Picture fashion in this example, a Picture-in-Picture display is also possible assuming the video of the first interpreter as a main window and the video of the callee as a sub window. Or, these videos may be displayed in equal size. Fig. 12(b) shows the screen of a callee terminal, on which a synthesized video of a caller and a second interpreter obtained by the video synthesizer 348 is displayed. While the video of the caller is displayed as a main window and the video of the second interpreter is displayed as a sub window in a Picture-in-Picture fashion in this example, a Picture-in-Picture display is also possible assuming the video of the second interpreter as a main window and the video of the callee as a sub window. Or, these videos may be displayed in equal size. Fig. 12(c) shows the screen of a first interpreter terminal, on which a synthesized video of a callee and a caller obtained by the video synthesizer 368 is displayed. While the video of the callee is displayed as a main window and the video of the caller is displayed as a sub window in a Picture-in-Picture fashion in this example, the videos may appear in opposite windows. Or, these videos may be displayed in equal size. Fig. 12(d) shows the screen of a second interpreter terminal, on which a synthesized video of a caller and a callee obtained by the video synthesizer 388 is displayed. While the video of the caller is displayed as a main window and the video of the callee is displayed as a sub window in a Picture-in-Picture fashion in this example, the videos may appear in opposite windows. Or, these videos may be displayed in equal size.

To the audio input of the caller terminal audio CODEC 326, an audio synthesizer 330 for synthesizing the audio output of the callee terminal audio CODEC 346 and the audio output of the first interpreter terminal audio CODEC 366 is connected. To the audio input of the cllee terminal audio CODEC 346, an audio synthesizer 350 for synthesizing the audio output of the caller terminal audio CODEC 326 and the audio output of the second interpreter terminal audio CODEC 386 is connected.

To the audio input of the first interpreter terminal audio CODEC 366, the audio output of the callee terminal audio CODEC 346 is connected. To the audio input of the second interpreter terminal audio CODEC 386, the audio output of the caller terminal audio CODEC 326 is connected.

With this configuration, the audio of the first interpreter is transmitted only to the caller, and the audio of the second interpreter is transmitted only to the callee. Thus, the speech of the caller is not disturbed by the audio of the second interpreter and the speech of the callee is not disturbed by the audio of the first interpreter, thereby providing a smooth conversation.

The caller terminal audio synthesizer 330 is equipped with a function to suppress the audio level from the callee terminal when the audio from the first interpreter terminal is detected, and the callee terminal audio synthesizer 350 is equipped with a function to suppress the audio level from the caller terminal when the audio from the second interpreter terminal is detected. This prevents overlapping of the audio of the first interpreter or the second interpreter over the audio of the opponent partywhich causes difficulty in listening. The first interpreter and the second interpreter can simultaneously interpret the speech of the speaker thus allowing a speedy and precise interpretation.

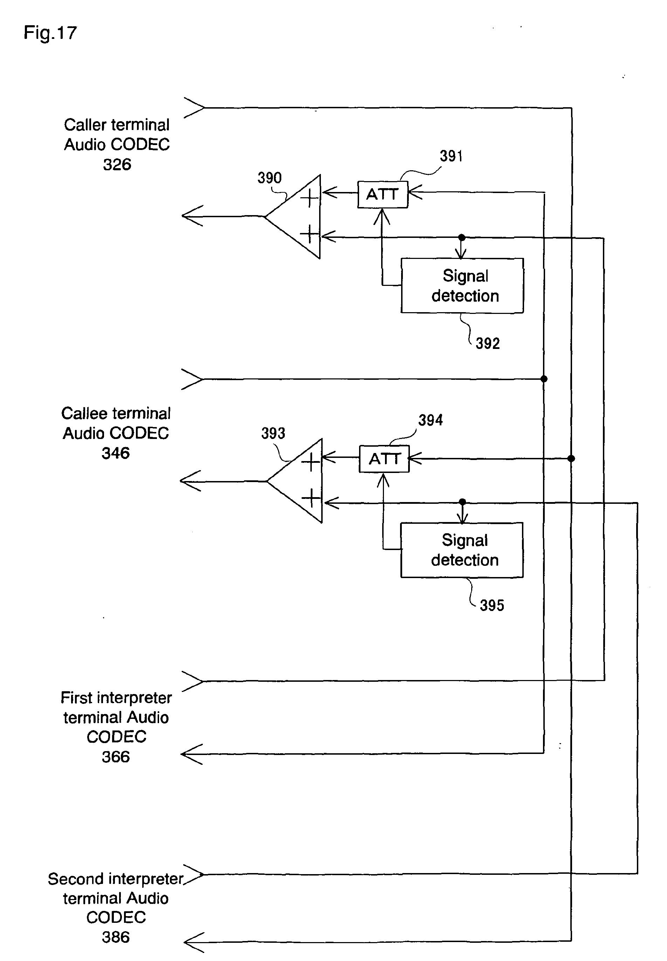

Fig. 17 shows specific examples of the function to suppress the audio of the callee or caller in the audio synthesizers 330, 350. As shown in Fig. 17, the audio output of the first interpreter terminal audio CODEC 366 is connected to a callee terminal audio signal adder 390. The audio output of the second interpreter terminal audio CODEC 386 is connected to a callee terminal audio signal adder 393. As a result, the unnecessary voice of the second interpreter is not transmitted to the caller and the unnecessary voice of the first interpreter is not transmitted to the callee.

To the caller terminal audio signal adder 390, the audio output of the callee terminal audio CODEC 346 is connected via an attenuator 391, which attenuates the audio from the callee terminal when the audio of the first interpreter is detected by the signal detector 392. To the callee terminal audio signal adder 393, the audio output of the caller terminal audio CODEC 326 is connected via an attenuator 394, which attenuates the audio from the caller terminal when the audio of the second interpreter is detected by the signal detector 395. The signal detectors 392, 395 are set to an appropriate detection level in order to prevent the audio of the opponent party from being attenuated by mistake due to a noise and the like.

In order to ensure that the caller or the callee can hear the audio of an interpreter immediately after the audio of the interpreter is detected by the signal detector 392, 395, an appropriate signal delay unit may be provided at the interpreter audio input of the audio signal adder 390, 393.

While the audio of the opponent party is attenuated by the attenuator 391, 394 so that the caller or callee can hear the original voice of the opponent party to some extent in the background of the audio of the first interpreter or second interpreter in this embodiment, a switch may be used instead to shut off the audio of the opponent party.

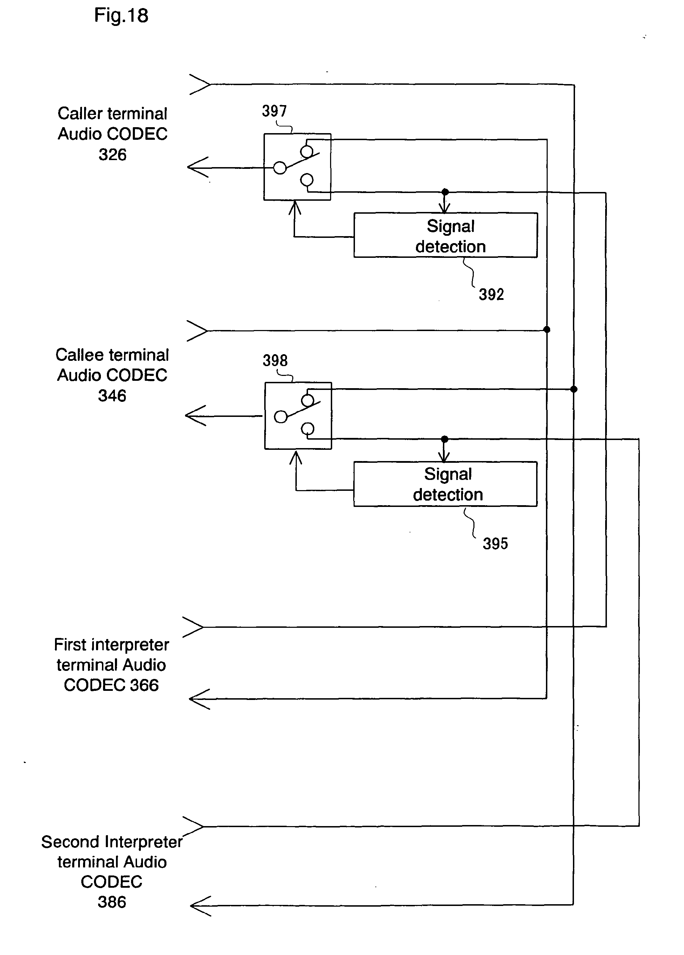

Fig. 18 shows an example where the audio of the opponent party is shut off when the audio of the interpreter is transmitted and only the audio of the interpreter is transmitted. As shown in Fig. 18, switches 397, 398 are used instead of the audio signal adders 390, 393. When the audio of the interpreter is detected by the signal detectors 392, 395, the switches 397, 398 are turned from the audio of the opponent party to the audio of the interpreter. The remaining configuration is the same as that shown in Fig. 17.

In order to ensure that the caller or the callee can hear the audio of an interpreter immediately after the audio of the interpreter is detected by the signal detector 392, 395, an appropriate signal delay unit may be provided at the interpreter audio input of the switch 397, 398.

While the audio signal adder 390, 393 simply adds the audio of the interpreter and the audio of the opponent party in the above example, audio multiplexing of two signals may be employed as well. For example in case a terminal supports a stereophonic audio, stereophonic synthesis is performed to the audio of the opponent party as the left channel and the audio of the interpreter as the right channel and the resultant is transmitted to a terminal, where the receiving party selects a necessary audio. In this configuration, it is not necessary to provide an attenuator to attenuate the audio of the distant party in the videophone interpretation system. The receiving party listens to the audios while adjusting the volume balance of the right and left channels of a headset.

While the first interpreter listens only to the audio of the callee to perform interpretation and the second interpreter listens only to the audio of the caller to perform interpretation, a configuration is allowed where the audio of the caller and the audio of the second interpreter may be attenuated and added to or audio multiplexed into the audio to be transmitted to the first interpreter, and also the audio of the callee and the audio of the first interpreter may be attenuated and added to or audio multiplexed into the audio to be transmitted to the second interpreter. By doing so, each interpreter can perform interpretation while checking the progress of the whole conversation and the response of the interpretee.

The videophone interpretation system 300 is equipped with an interpreter registration table 312 where the terminal number of a terminal used by an interpreter is registered and includes a controller 310 connected to each of the line I/Fs 320, 340, 360, 380, multiplexers/demultiplexers 322, 342, 362, 382, video synthesizers 328, 348, 368, 388, audio synthesizers 330, 350, and telop memories 332, 352, 372, 392. The controller 310 provides a function to connect a caller terminal, a callee terminal, a first interpreter terminal, and a second interpreter terminal by way of a function to accept a call from a caller terminal, a function to acquire the language type of the caller and the language type the a callee, a function to acquire the selection conditions for selecting an interpreter, a function to extract the terminal number of the first interpreter and the terminal number of the second interpreter by referencing an interpreter registration table 312 by using the acquired language types and selection conditions, a function to call the first interpreter terminal and second interpreter terminal by using the terminal numbers of the interpreters extracted, and a function to call the callee terminal by using the acquired terminal number of the callee.

Operation of the video synthesizers 328, 348, 368, 388 and audio synthesizers 330, 350 is controlled by the controller 310. A function is included where the user changes the video output method or audio output method by pressing a predetermined number button of a dial pad of each terminal. This is implemented that the multiplexer/demultiplexer 322, 342, 362, 382 detects the number button on the dial pad of each terminal is pressed based on a data signal or a tone signal and signals the detection to the controller. This ensures flexibility in the usage of the system on each terminal. For example, only necessary videos or audios are selected and displayed/output in accordance with the object or it is possible to replace a main window with a sub window, or change the position of the sub window.

To the input of the audio synthesizers 328, 348, 368, 388, a caller terminal telop memory 332, a callee terminal telop memory 352, a first interpreter terminal telop memory 372 and a second interpreter terminal telop memory 392 are connected respectively. Contents of each telop memory 332, 352, 372, 392 can be set from the controller 310. With this configuration, by setting a message to be displayed on each terminal to the telop memory 332, 352, 372, 392 and issuing a command to select a signal of the telop memory 332, 352, 372, 392 to the audio synthesizer 328, 348, 368, 388 in the setup of a videophone conversation via interpretation, it is possible to transmit necessary messages to respective terminals to establish a four-way call.

In case there is a term which is difficult to explain or a word which is difficult to pronounce in a videophone conversation, it is possible to register in advance the term in the term registration table 313 of the controller 310 in association with the number of the dial pad on each terminal. By doing so, it is possible to detect that the dial pad on each terminal is pressed during a videophone conversation by using a data signal or a tone signal on the multiplexer/demultiplexer 322, 342, 362, 382, extract a term corresponding to the number of the dial pad pressed from the term registration table 313, generate a text telop, and set the text telop to each telop memory, thereby displaying the term on each terminal. This communicates, by way of a text telop, to the opponent party a term which is difficult to explain or a word which is difficult to pronounce, thus providing a speedier and more precise videophone conversation.

Next, the connection processing by the controller 310 for establishing a videophone conversation via bidirectional simultaneous interpretation is described.

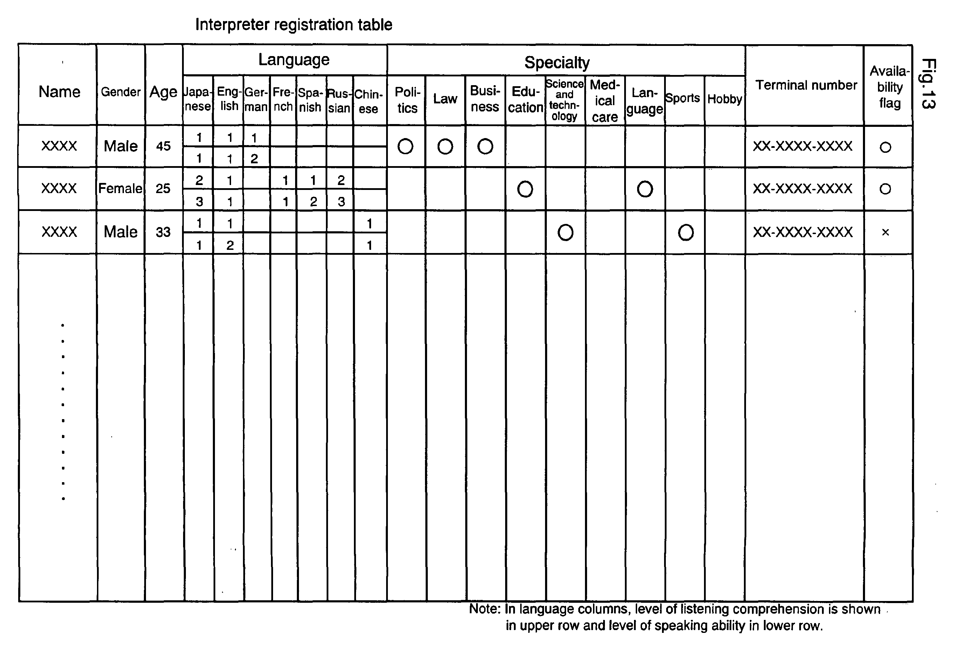

In this case also, prior to processing, an interpreter selection information and a terminal number of a terminal used by each interpreter are registered in the interpreter registration table 312 of the controller 310 from an appropriate terminal (not shown). Fig. 13 shows an example of registration item to be registered in the interpreter registration table 312. As shown in Fig. 13, items registered in the interpreter registration table 312 are same as those registered in the interpreter registration table 112 shown in Fig. 3 except that a listening comprehension level and a speaking level are separately registered for a supported language. By doing so, it is possible to individually select an optimum interpreter as a first interpreter who interprets the language of the callee into the language of the caller or a second interpreter who interprets the language of the caller into the language of the callee.

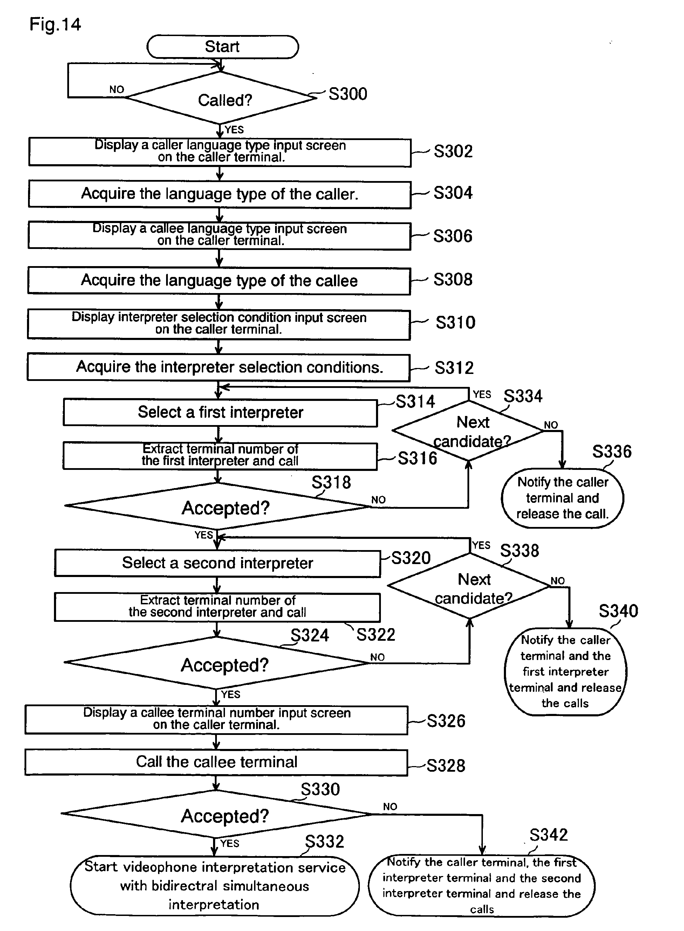

Fig. 14 shows a processing flowchart of the connection processing by the controller 310. The videophone interpretation system 300 accepts an order for an interpretation services, when the caller calls to a telephone number of the caller terminal line I/F. The videophone interpretation system 100 then calls the first interpreter terminal, second interpreter terminal, callee terminal, and establishes a connection for a bidirectional simultaneous interpretation service is established.

As shown in Fig. 14, the presence of the call to the caller terminal line I/F 320 is detected initially (S300). When a call is detected, a screen to prompt input of the language type of the caller similar to that shown in Fig. 5(a) is displayed on the caller terminal (S302). The language type of the caller input by the caller is acquired (S304). A screen to prompt input of the language type of the callee similar to that shown in Fig. 5(b) is displayed on the caller terminal (S306). The language type of the callee input by the caller is acquired (S308). Next, a screen to prompt the interpreter selection conditions similar to that shown in Fig. 6(a) is displayed on the caller terminal (S310). The interpreter selection conditions input by the caller are acquired (S312). In this example, the interpreter selection conditions are, same as the previous single interpretation, a gender, an age bracket, an area, a specialty and an interpretation level. The area is specified by using a ZIP code and an interpreter is selected starting with the habitation closest to the specified area. For any selections, in case it is not necessary to specify a condition, N/A may be selected.

Next, an interpreter who has a specified listening comprehension level of the language of the callee and a speaking level of the language of the caller, and whose gender, age, habitation and specialty satisfy the acquired selection conditions, with his/her availability flag being set is selected as a first interpreter referring to the interpreter registration table 312 (S314). The terminal number of the selected interpreter is extracted and called (S316). When a response is received from the first interpreter terminal (S318), an interpreter who has a specified listening comprehension level of the language of the caller and a speaking level of the language of the callee, and whose gender, age, habitation and specialty satisfy the acquired selection conditions, with his/her availability flag being set is selected as a second interpreter referring to the interpreter registration table 312 (S320). Then the terminal number of the selected interpreter is extracted and called (S322).

When a response is received from the second interpreter terminal (S324), a screen to prompt input of the terminal number of the callee similar to that shown in Fig. 7 is displayed on the caller terminal (S326). The terminal number of the callee input by the caller is extracted and called (S328).

When a response is received from the callee terminal (S330), a videophone interpretation service via bidirectional simultaneous interpretation starts (S332).

In case a response is not received from the first interpreter terminal in S318, whether another candidate is available is determined (S334). In case another candidate is available, execution returns to S314 and the procedure is repeated. In case another candidate is unavailable, the caller terminal is notified as such and the call is released (S336). In case a response is not received from the second interpreter terminal in S324, whether another candidate is available is determined (S338). In case another candidate is available, execution returns to S320 and the procedure is repeated. In case another candidate is unavailable, the caller terminal and first interpreter terminal are notified as such and the call is released (S340). In case a response is not received from the callee terminal in S330, the caller terminal, first interpreter terminal and second interpreter terminal are notified as such and the call is released (S342).

While, in a step of selecting a first interpreter (S314) and a step of selecting a second interpreter (S320), an interpreter who satisfies predetermined conditions is selected referring to the interpreter registration table 312 for simplicity in the above example, a configuration is also possible where, same as the first embodiment, a candidate list similar to that shown in Fig. 6(b) is displayed and the caller selects an interpreter from the list. In this case, the hourly rates (not shown) of each of the first interpreter and second interpreter registered in the interpreter registration table 312 may be extracted and displayed as a charge. This allows the user to consider the cost of the interpretation service before selecting an appropriate interpreter. The hourly rates of the interpreter may be determined from the interpretation level of the selected interpreter by referencing an accounting table which specifies the relationship between the interpretation level and the hourly rates.

The controller 310 comprises a timer (not shown) for calculating the fee of the interpretation service. The timer measures the time from when the connection is established to when it is released. On completion of an interpretation service, the fee is calculated from the time measured by the timer and sum of the hourly rates of the first interpreter and the second interpreter mentioned above and registered in a accounting database 314, and charged to the user later.

While in case the selected interpreter terminal does not accept the call, the caller is simply notified as such and the call is released in the above embodiment, an interpretation reservation table to register a caller terminal number and a callee terminal number may be provided and the caller and the callee may be notified on a later response from both the selected first interpreter and second interpreter to set a videophone conversation.

While the videophone interpretation system 300 comprises a line I/F, a multiplexer/demultiplexer, a video CODEC, an audio CODEC, a video synthesizer, an audio synthesizer and a controller in the above embodiment, these components need not be implemented by individual hardware (H/W) but the function of each component may be implemented by software processing on a computer.

While the first interpreter terminal 32 and the second interpreter terminal 34, same as the caller terminal 10 and the callee terminal 20, is located outside the interpretation center and called from the interpretation center over a public telephone line to provide an interpretation service in the above embodiment, the invention is not limited thereto but some or all of the interpreter terminals may be installed in the interpretation center so that the interpretation services are provided from the interpretation center.

In the above embodiment, an interpreter can join an interpretation service anywhere he/she may be, as long as he/she has a terminal which can be connected to a public telephone line. Thus the interpreter can provide an interpretation service by using the availability flag to make efficient use of free time. This allows efficient and stably operate of interpretation services which often have difficulty in securing necessary personel.

While a video signal of the home terminal is not input to the video synthesizers 328, 348, 368, 388 in the above embodiment, a function may be provided to input the video signal of the home terminal and synthesize and display to check the video on the terminal.

While the video synthesizers 328, 348, 368, 388 are used to synthesize videos for each terminal in the above embodiment, videos from all terminals may be synthesized at once and the resultant may be transmitted to each terminal. In this case, as shown in Fig. 21(b) for example, a video of the caller, a video of the callee, a video of the first interpreter and a video of the second interpreter may be displayed in a four split screen.

While a function is provided whereby the telop memories 332, 352, 372, 392 are provided and their outputs are added to the corresponding video synthesizers 328, 348, 368, 388 respectively in order to display a text telop on each terminal in the above embodiment, a function may be provided whereby telop memories to store audio information are provided and their outputs are added to the audio synthesizers 330, 350 and an audio synthesizers is provided at the input of each of the first interpreter terminal audio CODEC 366 and the second interpreter terminal audio CODEC 386, and the outputs of the corresponding telop memories are added in order to output an audio message on each terminal. This makes it possible to provide a videophone interpretation service even in case any of the caller, the callee, the first interpreter or the second interpreter is a visually impaired person.

Finally, a recording/reproduction function to record a video or an audio in a videophone interpretation service and reproduce the audio or video and transmit the resultant upon request by the user will be described.

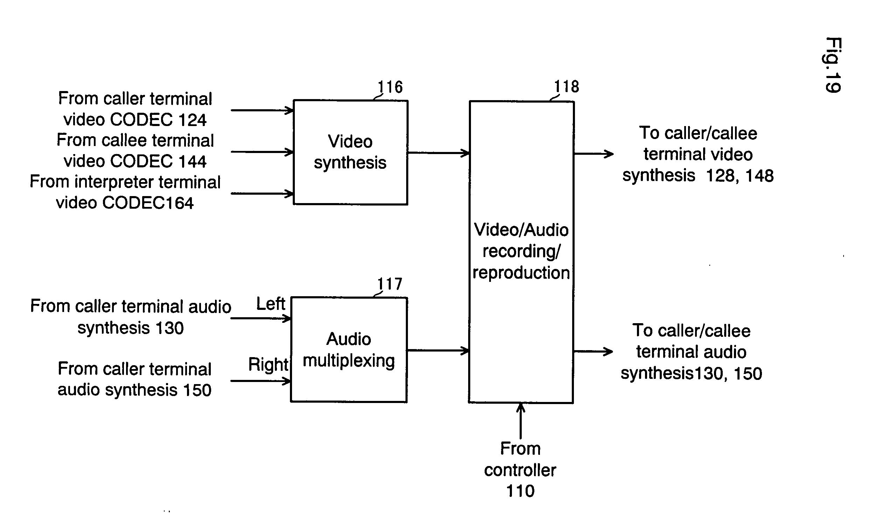

Fig. 19 shows an example of a recording/reproduction function in the videophone interpretation system according to the first embodiment. As shown in Fig. 19, a video from the caller terminal video CODEC 124, a video from the callee terminal video CODEC 144 , and a video from the interpreter terminal video CODEC 164 are synthesized by the video synthesizer 116 and the resultant is transmitted to a video/audio recorder/player 118. The audio output of the audio synthesizer 130 to be transmitted to the caller terminal and the audio output of the audio synthesizer 150 to be transmitted to the callee terminal are audio multiplexed by an audio multiplexer 117 assuming the former as the left-channel and the latter as the right-channel, and the resultant is transmitted to the video/audio recorder/player 118.

The video output of the video synthesizer 116 and the audio output of the audio multiplexer 117 during an interpretation service are automatically recorded onto the video/audio recorder/player 118 and stored for each user based on a command from the controller 110. The video and audio stored in the video/audio recorder/player 118 are reproduced based on a command from the controller 110 when the multiplexer/demultiplexer 122 or 142 detect a predetermined dial number is pressed on the caller terminal or callee terminal, and the reproduced video and audio are transmitted to each terminal via the video synthesizer 128 or 148 and the audio synthesizer 130 or 150 for the detected terminal.

This allows the user to check a video from each terminal during an interpretation in a four split screen shown in Fig. 21(a) and the like. In case the user terminal is equipped with an audio multiplexing/demultiplexing function, an audio from each terminal can be checked, by the language of the caller in left-channel and by the language of the callee in right-channel. The user may call the interpretation center at a later time and input a predetermined access code from his/her terminal to reproduce and check a video and an audio stored in the video/audio recorder/player 118.

A method for synthesizing a video or audio to be recorded onto a video/audio recorder/player is not limited to the above example but may be any method as long as the user can check the contents of the interpretation service. In order to support a case where the user terminal is not equipped with the audio multiplexing/demultiplexing function, an audio transmitted to the caller and an audio transmitted to the callee may be individually recorded and the audio specified by a terminal may be reproduced and transmitted.

The user may be a person other than the person who has obtained the interpretation service. When a person granted an access right has called the interpretation center from a videophone terminal and input an access code, he/she may receive a video and an audio stored in the video/audio recorder/player 118.

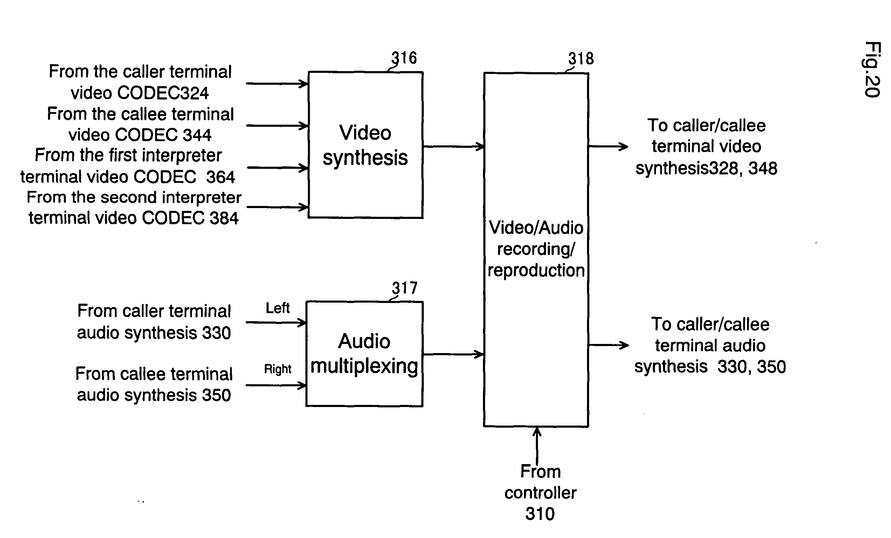

Fig. 20 shows an example of a recording/reproduction function in the videophone interpretation system with bidirectional simultaneous interpretation according to the third embodiment. As shown in Fig. 20, a video from the caller terminal video CODEC 24, a video from the callee terminal video CODEC 344, a video from the first interpreter terminal video CODEC 364, and a video from the second interpreter terminal video CODEC 384 are synthesized by the video synthesizer 316 and the resultant is transmitted to a video/audio recorder/player 318. The audio output of the audio synthesizer 330 to be transmitted to the caller terminal and the audio output of the audio synthesizer 350 to be transmitted to the callee terminal are audio multiplexed by an audio multiplexer 317 assuming the former as the left-channel and the latter as the right-channel, and the resultant is transmitted to the video/audio recorder/player 318.

The video output of the video synthesizer 316 and the audio output of the audio multiplexer 317 during an interpretation service are automatically recorded onto the video/audio recorder/player 318 and stored for each user based on a command from the controller 310. The video and audio stored in the video/audio recorder/player 318 are reproduced based on a command from the controller 310 when the multiplexer/demultiplexer 322 or 342 detect a predetermined dial number is pressed on the caller terminal or callee terminal is detected, and the reproduced video and audio are transmitted to each terminal via the video synthesizer 328 or 348 and the audio synthesizer 330 or 350 for the detected terminal.

This allows the user to check a video from each terminal during an interpretation in a four split screen shown in Fig. 21(b) and the like. In case the user terminal is equipped with an audio multiplexing/demultiplexing function, an audio from each terminal can be checked, by the language of the caller in left-channel and by the language of the callee in right-channel. The user may call the interpretation center at a later time and input a predetermined access code from his /her terminal to reproduce and check a video and an audio stored in the video/audio recorder/player 318.

A method for synthesizing a video or audio to be recorded onto a video/audio recorder/player is not limited to the above example but may be any method as long as the user can check the contents of the interpretation service. In order to support a case where the user terminal is not equipped with the audio multiplexing/demultiplexing function, an audio transmitted to the caller and an audio transmitted to the callee may be individually recorded and the audio specified by a terminal may be reproduced and transmitted.

The user may be a person other than the person who has obtained the interpretation service. When a person granted an access right has called the interpretation center from a videophone terminal and input an access code, he/she may receive a video and an audio stored in the video/audio recorder/player 318.

### Industrial Applicability

As mentioned above, the videophone interpretation system or videophone interpretation method of the invention is advantageous in that a caller does not have to search for an interpreter in advance and hold consultation with a callee and that the system and the method are available also in an emergency, thereby minimizing the restraint time of the interpreter to reduce the interpretation service cost.

## Claims

1. A videophone interpretation system where an interpreter interprets a videophone conversation between a caller and a callee using different languages, said videophone interpretation system comprising connection means for connecting a caller terminal, a callee terminal and an interpreter terminal, and communication means for communicating a video and an audio between the terminals connected by said connection means, **characterized in that**
said connection means includes an interpreter registration table where at least the language types interpretable by an interpreter and the terminal number of the interpreter are registered, a function to accept a call from a caller terminal, a function to acquire the terminal number of a callee, language type of the caller and the language type of the callee from the callee terminal for which said call was accepted, a function to extract the terminal number of the interpreter terminal by referencing said interpreter registration table from the acquired language type of the caller and language type of the callee, a function to call the interpreter terminal by using the terminal number of said interpreter extracted, and a function to call the callee terminal by using the acquired terminal number of the callee and that said communication means transmits to said caller terminal a video including at least a video from said callee terminal and an audio including at least an audio from said interpreter terminal, a function to transmit to said callee terminal a video including at least a video from said caller terminal and an audio including at least an audio from said interpreter terminal, and a function to transmit to said interpreter terminal an audio including at least an audio from said caller terminal and an audio from said callee terminal.

2. The videophone interpretation system according to claim 1, **characterized in that** said communication means includes a function to transmit to said caller terminal a video obtained by synthesizing a video from said callee terminal as a main window and a video from said interpreter terminal as a sub window, a function to transmit to said callee terminal a video obtained by synthesizing a video from said caller terminal as a main window and a video from said interpreter terminal as a sub window, and a function to transmit to said interpreter terminal a video obtained by synthesizing a video from said caller terminal and a video from said callee terminal.

3. The videophone interpretation system according to claim 1 or 2, said communication means including a first audio transmission function to synthesize an audio from said callee terminal and an audio from said interpreter terminal and transmit the resultant to said caller terminal, a second audio transmission function to synthesize an audio from said caller terminal and an audio from said interpreter terminal and transmit the resultant to said callee terminal, a third audio transmission function to synthesize an audio from said caller terminal and an audio from said callee terminal and transmit the resultant to said interpreter terminal, and an unnecessary side audio suppression function to suppress an unnecessary side audio either an audio from the interpreter terminal supplied to said first audio transmission function or an audio from the interpreter terminal supplied to said second audio transmission function, based on a command from said interpreter terminal,
**characterized in that**
said first audio transmission function includes a callee audio suppression function to suppress an audio from said callee terminal when an audio from said interpreter terminal is detected and that said second audio transmission function includes a caller audio suppression function to suppress an audio from said caller terminal when an audio from said interpreter terminal is detected.

4. The videophone interpretation system according to claim 1 or 2, said communication means including a first audio transmission function to selectively transmit either an audio from said callee terminal or an audio from said interpreter terminal to said caller terminal, a second audio transmission function to selectively transmit either an audio from said caller terminal or an audio from said interpreter terminal to said callee terminal, a third audio transmission function to synthesize an audio from said caller terminal and an audio from said callee terminal and transmit the resultant to said interpreter terminal, and an unnecessary side audio suppression function to suppress an unnecessary side audio either an audio from the interpreter terminal supplied to said first audio transmission function or an audio from the interpreter terminal supplied to said second audio transmission function, based on a command from said interpreter terminal, **characterized in that**
said first audio transmission function includes a function to shut off an audio from said callee terminal and transmit an audio from said interpreter terminal when an audio from said interpreter is detected and that
said second audio transmission function includes a function to shut off an audio from said caller terminal and transmit an audio from said interpreter terminal when an audio from said interpreter terminal is detected.

5. The videophone interpretation system according to claim 1 or 2, **characterized in that** said communication means includes a first audio transmission function to perform audio multiplexing on an audio from said callee terminal and an audio from said interpreter terminal and transmit the resultant to said caller terminal, a second audio transmission function to perform audio multiplexing on an audio from said caller terminal and an audio from said interpreter terminal and transmit the resultant to said callee terminal, a third audio transmission function to perform audio multiplexing on an audio from said caller terminal and an audio from said callee terminal and transmit the resultant to said interpreter terminal, and
an unnecessary side audio suppression function to suppress an unnecessary side audio either an audio from the interpreter terminal supplied to said first audio transmission function or an audio from the interpreter terminal supplied to said second audio transmission function, based on a command from said interpreter terminal.

6. The videophone interpretation system according to any one of claims 1 through 5, **characterized in that** said communication means includes a function to record a video including a video from said caller terminal, a video from said callee terminal and a video from said interpreter terminal and an audio including an audio from said caller terminal, an audio from said callee terminal and an audio from said interpreter terminal, and a function to reproduce and transmit the recorded video and voice in response to a request made by a terminal.

7. A videophone interpretation system where a videophone conversation between a caller and a callee using different languages is interpreted by a first interpreter who interprets the language of the callee to the language of the caller and a second interpreter who interprets the language of the caller into the language of the callee, said videophone interpretation system comprising connection means for connecting a caller terminal, a callee terminal, a first interpreter terminal and a second interpreter terminal and communication means for communicating a video and an audio between the terminals connected by said connection means, **characterized in that**
said connection means includes an interpreter registration table where at least the language types interpretable by an interpreter and the terminal number of the interpreter are registered, a function to accept a call from a caller terminal, a function to acquire the terminal number of a callee, language type of the caller and the language type of the callee from the caller terminal for which said call was accepted, a function to extract the terminal number of the first interpreter by referencing said interpreter registration table from said acquired language type of the callee and language type of the caller, a function to call the first interpreter by using said terminal number of the interpreter extracted, a function to extract the terminal number of the second interpreter by referencing said interpreter registration table from said acquired language type of the caller and language type of the callee, a function to call the second interpreter by using said terminal number of the interpreter extracted, and a function to call the callee terminal by using said acquired terminal number of the callee, and that
said communication means includes a function to transmit a video including at least a video from said callee terminal and an audio including at least an audio from said first interpreter to said caller terminal, a function to transmit a video including at least a video from said caller terminal and an audio including at least an audio from said second interpreter to said callee terminal, a function to transmit an audio including at least an audio from said callee terminal to said first interpreter terminal, and a function to transmit an audio including at least an audio from said caller terminal to said second interpreter terminal.

8. The videophone interpretation system according to claim 7, **characterized in that** said communication means includes a function to transmit a video obtained by synthesizing a video from said callee terminal as a main window and a video from said first interpreter terminal as a sub window to said caller terminal, a function to transmit a video obtained by synthesizing a video from said caller terminal as a main window and a video from said second interpreter terminal as a sub window to said callee terminal, a function to transmit a video obtained by synthesizing a video from said callee terminal and a video from said caller terminal to said first interpreter terminal, and a function to transmit terminals video obtained by synthesizing a video from said caller terminal and a video from said callee terminal to said second interpreter.

9. The videophone interpretation system according to claim 7 or 8, said communication means including a first audio transmission function to synthesize an audio from said callee terminal and an audio from said first interpreter terminal and transmit the resultant to said caller terminal, a second audio transmission funciton to synthesize an audio from said caller terminal and an audio from said second interpreter terminal and transmit the resultant to said callee terminal, a third audio transmission function to transmit at least an audio from said callee terminal to said first interpreter terminal, and a fourth audio transmission function to transmit at least an audio from said caller terminal to said second interpreter terminal, **characterized in that**
said first audio transmission function includes a callee audio supression function to suppress an audio from said callee terminal when an audio from said first interpreter terminal is detected and that
said second audio transmission function includes a caller audio suppression function to suppress an audio from said caller terminal when an audio from said second interpreter terminal is detected.

10. The videophone interpretation system according to claim 7 or 8, said communication means including a first audio transmission function to selectively transmit either an audio from said callee terminal or an audio from said first interpreter terminal to said caller terminal, a second audio transmission function to selectively transmit either an audio from said caller terminal or an audio from said second interpreter terminal to said callee terminal, a third audio transmission function to transmit at least an audio from said callee terminal to said first interpreter terminal, and a fourth audio transmission function to transmit at least an audio from said caller terminal to said second interpreter terminal, **characterized in that**
said first audio transmission function includes a function to shut off an audio from said callee terminal and transmit an audio from said first interpreter terminal when detecting an audio from said first interpreter terminal and that
said second audio transmission function includes a function to shut off an audio from said caller terminal and transmit an audio from said second interpreter terminal when detecting an audio from said second interpreter terminal.

11. The videophone interpretation system according to claim 7 or 8, **characterized in that** said communication means includes a first audio transmission function to perform audio multiplexing on an audio from said callee terminal and an audio from said first interpreter terminal and transmit the resultant to said caller terminal, a second audio transmission function to perform audio multiplexing on an audio from said caller terminal and an audio from said second interpreter terminal and transmit the resultant to said callee terminal, a third audio transmission function to transmit at least an audio from said callee terminal to said first interpreter terminal, and a fourth audio transmission function to transmit at least an audio from said caller terminal to said second interpreter terminal.

12. The videophone interpretation system according to any one of claims 7 through 11, **characterized in that** said communication means includes a function to record a video including a video from said caller terminal, a video from said callee terminal, a video from said first interpreter terminal and a video from said second interpreter terminal and an audio including an audio from said caller terminal, an audio from said callee terminal, an audio from said first interpreter terminal and an audio from said second interpreter terminal, and a function to reproduce and transmit the recorded video and voice in response to a request made by a terminal.

13. The videophone interpretation system according to any one of claims 1 through 12, **characterized in that** selection information for selecting an interpreter is registered in said interpreter registration table and that
said connection means includes a function to acquire the conditions for selecting an interpreter from said caller terminal and a function to extract the terminal number of an interpreter who satisfies said acquired selection conditions by referencing said interpreter registration table.

14. The videophone interpretation system according to any one of claims 1 through 13, **characterized in that** an availability flag to indicate whether an interpreter is available is registered in said interpreter registration table and that
said connection means includes a function to reference an availability flag in said interpreter registration table to extract the terminal number of an available interpreter.

15. The videophone interpretation system according to any one of claims 1 through 14, **characterized in that** said connection means includes a function to generate a text message to be transmitted to each of said terminals and that
said communication means includes a function to transmit said generated text message to each of said terminals.

16. The videophone interpretation system according to any one of claims 1 through 15, **characterized in that** said connection means includes a function to generate a voice message to be transmitted to each of said terminals and that
said communication means includes a function to transmit said generated voice message to each of said terminals.

17. A videophone interpretation system according to any one of claims 1 through 16, **characterized in that** said connection means includes a function to register a term used during a conversation based on a command from each of said terminals and a function to extract said registered term and generate a telop based on a command from each of said terminals and that
said communication means includes a function to transmit said generated telop to each of said terminals.

18. A videophone interpretation system according to any one of claims 1 through 17, **characterized in that** accounting information on an interpreter is registered in said interpreter registration table and that said connection means includes a function to measure the time that said caller terminal or callee terminal obtains an interpretation service and a function to calculate a fee from said measured time and accounting information registered in said interpreter registration table.

19. A videophone interpretation method where an interpreter interprets a videophone conversation between a caller and a callee using different languages,
said method using an interpreter registration table where at least the language types interpretable by an interpreter and the terminal number of the interpreter are registered, **characterized in that** said method comprises steps of
accepting a call from a caller terminal, acquiring the terminal number of a callee, language type of the caller and the language type of the callee from the caller terminal for which said call was accepted, extracting the terminal number of the interpreter by referencing said interpreter registration table from the acquired language type of the caller and language type of the callee, calling the interpreter terminal by using the terminal number of said interpreter extracted, calling the callee terminal by using the acquired terminal number of the callee,
transmitting a video including at least a video from said callee terminal and an audio including at least an audio from said interpreter terminal to said caller terminal, transmitting a video including at least a video from said caller terminal and an audio including at least an audio from said interpreter terminal to said callee terminal, and transmitting an audio including at least an audio from said caller terminal and an audio from said callee terminal to said interpreter terminal.

20. A videophone interpretation method where a videophone conversation between a caller and a callee using different languages is interpreted by a first interpreter who interprets the language of a callee into the language of a caller, and a second interpreter who interprets the language of the caller into the language of the callee,
said method using an interpreter registration table where at least the language types interpretable by an interpreter and terminal number of the interpreter are registered,
**characterized in that**
said method comprises steps of accepting a call from a caller terminal, acquiring the terminal number of a callee, language type of the caller and the language type of the callee from the callee terminal for which said call was accepted, extracting the terminal number of a first interpreter by referencing said interpreter registration table from the acquired language type of the callee and language type of the caller, calling the first interpreter terminal by using the terminal number of said first interpreter extracted, extracting the terminal number of a second interpreter by referencing said interpreter registration table from the acquired language type of the caller and language type of the callee, calling the second interpreter terminal by using the terminal number of said second interpreter extracted, calling the callee terminal by using the acquired terminal number of the callee,
transmitting a video including at least a video from said callee terminal and an audio including at least an audio from said first interpreter terminal to said caller terminal, transmitting a video including at least a video from said caller terminal and an audio including at least an audio from said second interpreter terminal to said callee terminal, transmitting an audio including at least an audio from said callee terminal to said first interpreter terminal, and transmitting an audio including at least an audio from said caller terminal to said second interpreter terminal.
